# EUROPEAN PATENT APPLICATION

(11) **EP 4 603 429 A1**
(43) Date of publication of application: **20.08.2025**
(21) Application number: 23954972.8
(22) Date of filing: 12.12.2023
(51) Int. Cl.: B65G 47/90

(54) **BATTERY GRABBING DEVICE, BATTERY PRODUCTION LINE AND CONTROL METHOD FOR BATTERY GRABBING DEVICE**

(30) Priority: 13.10.2023 CN 202311323966
(71) Applicant: Contemporary Amperex Technology (Hong Kong) Limited, Central (HK)
(72) Inventor: WU, Kai, Ningde, Fujian 352100 (CN); LUO, Jian, Ningde, Fujian 352100 (CN); MA, Yuhang, Ningde, Fujian 352100 (CN)
(74) Representative: Ziebig Hengelhaupt Intellectual Property Attorneys Patentanwaltskanzlei PartGmbB
(86) International application number: PCT/CN2023/138216
(87) International publication number: WO 2025/076981

(57) **Abstract**

Embodiments of this disclosure disclose a battery grabbing device, a battery production line, and a control method for a battery grabbing device, where the battery grabbing device can increase the level of automation of the battery grabbing device. The level of automation of the battery production line is increased accordingly after the battery grabbing device is adopted. By using the control method for the battery grabbing device, qualified batteries can be grabbed quickly and accurately, improving the grabbing efficiency of batteries. The battery grabbing device includes a support, a workbench, a detection apparatus, a battery grabbing apparatus, and a tray grabbing apparatus, where the workbench is configured to carry a tray and a battery in the tray, the detection apparatus is disposed on the support and configured to detect whether the battery on the workbench is qualified, the battery grabbing apparatus is configured to grab the qualified battery, and the tray grabbing apparatus is at least configured to grab the tray after the battery grabbing apparatus grabs the qualified battery. The battery grabbing device provided in this disclosure is configured to grab qualified batteries.

## Description

### CROSS-REFERENCE TO RELATED APPLICATIONS

This disclosure is proposed based on and claims priority to Chinese Patent Application No. 202311323966.4, filed on October 13, 2023 and entitled "BATTERY GRABBING DEVICE, BATTERY PRODUCTION LINE, AND CONTROL METHOD FOR BATTERY GRABBING DEVICE", which is incorporated herein by reference in its entirety.

### TECHNICAL FIELD

This disclosure relates to a battery grabbing technology, and in particular to, a battery grabbing device, a battery production line, and a control method for a battery grabbing device.

### BACKGROUND

New energy batteries are widely used in our life and industries. For example, new energy vehicles equipped with batteries have been extensively used. In addition, batteries are increasingly applied in the field of energy storage.

In the related art, a battery grabbing device is provided for grabbing batteries during battery production. For the battery grabbing device in the related art, batteries are located in a tray, and the tray is placed on a workbench. This reduces direct contact between the batteries and the workbench, reducing the risk of battery pollution. However, in the related art, after the battery grabbing apparatus grabs the battery in the tray, the tray is still left on the workbench and needs to be removed manually. Therefore, the battery grabbing device has a low level of automation. In addition, the battery grabbing apparatus grabs batteries regardless of whether they are qualified. Therefore, how to continuously grab qualified batteries in an automated manner is one of the problems to be solved in the industry.

### SUMMARY

Embodiments of this disclosure provide a battery grabbing device, a battery production line, and a control method for a battery grabbing device, so as to increase the level of automation of the battery grabbing device and achieve continuous grabbing of qualified batteries.

A first aspect of this disclosure provides a battery grabbing device, including a support, a workbench, a detection apparatus, a battery grabbing module, and a tray grabbing apparatus, where the workbench is configured to carry a tray and a battery in the tray, the detection apparatus is disposed on the support and configured to detect whether the battery on the workbench is qualified, the battery grabbing apparatus is configured to grab the qualified battery, and the tray grabbing apparatus is at least configured to grab the tray after the battery grabbing apparatus grabs the qualified battery.

With the detection apparatus disposed on the support, the detection apparatus can detect whether a battery on the workbench is qualified when the battery is placed on the workbench. If the battery is qualified, the battery grabbing apparatus grabs the qualified battery, and if the battery is unqualified, the battery grabbing apparatus does not grab the unqualified battery, thereby ensuring that all batteries grabbed by the battery grabbing apparatus are qualified batteries. This increases the probability of the entire battery grabbing device in grabbing qualified batteries. On this basis, the battery is located in the tray, and after the battery grabbing apparatus grabs the qualified battery, the tray grabbing apparatus can grab the tray. Then, the workbench can carry a new tray, and the new tray is provided with a new battery for the next round of grabbing. This increases the level of automation of the battery grabbing device. In the related art, after the battery grabbing apparatus grabs a battery or qualified battery, the tray is still left on the workbench and needs to be removed from the workbench manually. Therefore, the battery grabbing device has a low level of automation. However, in this disclosure, the tray grabbing apparatus is disposed. Therefore, after the battery grabbing apparatus grabs the qualified battery, the tray grabbing apparatus at least grabs the tray, without a need for manual grabbing. This increases the level of automation of the battery grabbing device.

In a possible implementation of this disclosure, the detection apparatus includes a first grip camera, and the first grip camera is configured to acquire image information of the battery, where the image information is used to indicate whether the battery is qualified.

Because cameras have the advantages of ready availability and low cost, the detection apparatus includes the first grip camera, and the first grip camera is configured to acquire the image information of the battery. Whether the battery is a qualified battery is determined based on the image information of the battery.

In a possible implementation of this disclosure, the battery grabbing device further includes a first acquisition apparatus, and the first acquisition apparatus is disposed on the support and configured to acquire status information of the qualified battery on the workbench, where the status information is used to indicate at least one of size information of the qualified battery and position information of the qualified battery.

The battery grabbing apparatus needs to grab the qualified battery, but it cannot determine the status information of the qualified battery. Therefore, the battery grabbing device further includes the first acquisition apparatus disposed on the support, which is configured to acquire the status information of the qualified battery on the workbench. In this case, the qualified battery can be accurately grabbed through cooperation between the first acquisition apparatus and the battery grabbing apparatus.

In a possible implementation of this disclosure, the first acquisition apparatus includes a second grip camera, and the second grip camera is configured to acquire the size information of the qualified battery.

Because cameras have the advantages of ready availability and low cost, the first acquisition apparatus includes the second grip camera, and the second grip camera is configured to acquire the size information of the qualified battery. The size information may include the length, width, height, and the like of the qualified battery. In this case, the qualified battery can be accurately grabbed through further cooperation between the first acquisition apparatus and the battery grabbing apparatus.

In a possible implementation of this disclosure, the first acquisition apparatus includes a position acquisition piece, and the position acquisition piece is configured to acquire the position information of the qualified battery.

The second grip camera is configured to acquire only the size information of a qualified battery, but it cannot acquire the position information of the qualified battery. Therefore, the first acquisition apparatus includes the position acquisition piece for acquiring the position information of the qualified battery. In this case, the qualified battery can be accurately grabbed through further cooperation between the first acquisition apparatus and the battery grabbing apparatus.

In a possible implementation of this disclosure, the battery grabbing device further includes a second acquisition apparatus, the second acquisition apparatus is disposed on the support, and the second acquisition apparatus is configured to acquire layer information of the tray.

With the second acquisition apparatus disposed, the second acquisition apparatus is configured to acquire the layer information of the tray, and the second grip camera can acquire the size information of the qualified battery. In this case, the second acquisition apparatus and the second grip camera can face each other, so that the size information of the qualified battery can be obtained more accurately. This enables the battery grabbing apparatus to grab qualified batteries accurately and the tray grabbing apparatus to grab trays accurately. It should be explained that the second acquisition apparatus and the second grip camera can face each other, meaning that the layer information of the tray can be determined based on height information in the size information of the qualified battery acquired by the second grip camera. In this way, the second acquisition apparatus can also acquire the layer information of the tray, and the two pieces of information can be compared for correction. For example, if within an acceptable error range, the information acquired by the second grip camera and the second acquisition apparatus is accurate; if beyond the acceptable error range, the user should be reminded to inspect and repair the second grip camera and the second acquisition apparatus.

In a possible implementation of this disclosure, the workbench includes a first workbench and a second workbench, the first workbench is configured to carry the tray and the battery in the tray, and after the battery grabbing apparatus grabs the qualified battery on the first workbench, the tray grabbing apparatus grabs the tray on the first workbench and transports the tray to the second workbench.

With the first workbench disposed, the first workbench is configured to carry the tray and the battery in the tray, and the second workbench is configured to carry the tray grabbed by the tray grabbing apparatus. With the two workbenches arranged separately, the battery grabbing device can be controlled and operated conveniently.

In a possible implementation of this disclosure, the workbench includes a first transport platform and a second transport platform, the first transport platform is configured to transport the tray and the battery in the tray to the first workbench, and the second transport platform is configured to transport the tray on the second workbench to other positions.

With the first transport platform disposed to transport the tray and the battery in the tray to the first workbench and the second transport platform disposed to transport the tray on the second workbench to other positions, less time and manpower are required.

In a possible implementation of this disclosure, the battery grabbing apparatus includes a first frame, a first gripping jaw assembly, a second gripping jaw assembly, a gripper driver, and a first distance adjusting mechanism. The first gripping jaw assembly is disposed on the first frame and provided with a first gripper, the second gripping jaw assembly is disposed on the first frame and provided with a second gripper, and the first gripper and the second gripper are arranged opposite each other and spaced apart. The gripper driver is configured to drive the first gripper and/or the second gripper to move so that the first gripper and the second gripper move towards each other, where the first gripper and the second gripper cooperate to grip the qualified battery. The first distance adjusting mechanism is arranged between the first frame and the first gripping jaw assembly and/or between the first frame and the second gripping jaw assembly, and is configured to drive the first gripping jaw assembly and the second gripping jaw assembly to move towards or away from each other relative to the first frame, so as to adjust a distance between the first gripping jaw assembly and the second gripping jaw assembly.

With the first gripping jaw assembly and the second gripping jaw assembly disposed on the first frame, the first gripper and the second gripper can move towards each other under the driving force of the gripper driver, so as to grip the qualified battery. However, the distance between the first gripper and the second gripper is limited by the structural space of the first gripping jaw assembly and the second gripping jaw assembly, batteries of different specifications or sizes may not be grabbed. For grabbing qualified batteries of different specifications or sizes, the first distance adjusting mechanism is arranged between the first frame and the first gripping jaw assembly and/or between the first frame and the second gripping jaw assembly to directly adjust the distance between the first gripping jaw assembly and the second gripping jaw assembly. In this way, the distance between the first gripper and the second gripper can be adjusted within a wider range, allowing the qualified batteries of more varied specifications or sizes to be grabbed.

In a possible implementation of this disclosure, the first distance adjusting mechanism includes a rotation driver and a transmission mechanism, where an input end of the transmission mechanism is drivingly connected to the rotation driver, and an output end of the transmission mechanism is drivingly connected to the first gripping jaw assembly and/or the second gripping jaw assembly, where the transmission mechanism is configured to convert rotary torque of the rotation driver into linear motion and transmit the linear motion to the first gripping jaw assembly and/or the second gripping jaw assembly.

The rotation driver is a mechanism that provides torque through rotation, for example, an apparatus such as a motor. The transmission mechanism is configured to convert the rotary torque of the rotation driver into linear motion, allowing the first gripping jaw assembly and/or the second gripping jaw assembly to move linearly under the driving force generated due to the rotary torque of the rotation driver. The linear motion is simple and easy to understand. In this way, the qualified batteries of more varied specifications and sizes can be grabbed.

In a possible implementation of this disclosure, the transmission mechanism includes a transmission rod having a screw thread and a screw thread disposed on the first gripping jaw assembly and/or the second gripping jaw assembly, where the transmission rod is permanently connected to the rotation driver, the screw thread of the transmission rod matches the screw thread on the first gripping jaw assembly and/or the second gripping jaw assembly, and the rotation driver is configured to drive the transmission rod to rotate so as to drive the first gripping jaw assembly and the second gripping jaw assembly to move towards or away from each other relative to the first frame.

The transmission mechanism includes the transmission rod having the screw thread and the screw thread disposed on the first gripping jaw assembly and/or the second gripping jaw assembly. Regarding the cooperation between the transmission rod and the screw thread, the accuracy of linear motion can be controlled based on a spacing between the screws, a speed of linear motion can be controlled depending on the rotation speed of the transmission rod, and a distance of linear motion can be controlled depending on the rotation turns or rotation arc length of the transmission rod. In this way, accurate control can be implemented, with high transmission efficiency and accuracy.

In a possible implementation of this disclosure, the first distance adjusting mechanism further includes a first slide rail assembly, and the first gripping jaw assembly and/or the second gripping jaw assembly are slidably connected to the first frame through the first slide rail assembly.

With the first gripping jaw assembly and/or the second gripping jaw assembly slidably connected to the first frame through the first slide rail assembly, the first gripping jaw assembly and/or the second gripping jaw assembly can be moved easily, reducing the friction between them and the first frame. In addition, the movement can be guided and limited.

In a possible implementation of this disclosure, the first slide rail assembly includes a first slide rail fixed on the first frame and a first slider fixed on the first gripping jaw assembly and/or the second gripping jaw assembly, where the first slide rail extends linearly along a direction in which the first gripping jaw assembly and the second gripping jaw assembly move towards or away from each other relative to the first frame, and the first slider is slidably connected to the first slide rail.

The first slide rail assembly includes the first slide rail fixed on the first frame and the first slider fixed on the first gripping jaw assembly and/or the second gripping jaw assembly. The first slider slides on the first slide rail, reducing the friction between the first slider and the first frame. In addition, the first slide rail can also play a role in position limiting.

In a possible implementation of this disclosure, the first distance adjusting mechanism further includes a distance measuring device, and the distance measuring device is configured to measure displacement generated when the first gripping jaw assembly and the second gripping jaw assembly move towards or away from each other relative to the first frame.

The distance measuring device is disposed to measure the displacement generated when the first gripping jaw assembly and second gripping jaw assembly move towards or away from each other relative to the first frame, so that more accurate adjustment can be implemented.

In a possible implementation of this disclosure, the first gripper and/or the second gripper include a fixed frame, an abutting piece, and an elastic member, where the elastic member is located between the abutting piece and the fixed frame to provide a buffer force for pushing away the abutting piece and the fixed frame.

With the elastic member disposed, when the first gripper and the second gripper grip a qualified battery, the abutting piece is subject to a counteracting force from a contact surface of the battery and transmits the counteracting force to the elastic member, and the elastic member deforms under the force. In this case, the abutting piece is displaced towards the elastic member to some extent and absorbs that part of the counteracting force. In addition, the deformed elastic member generates a buffer force to push the abutting piece to the qualified battery, allowing the battery to be gripped by the abutting piece. This achieves flexible grabbing, preventing damage to the surface of the qualified battery or deformation of the qualified battery due to gripping.

In a possible implementation of this disclosure, the first gripper and/or the second gripper include a plurality of abutting pieces and a plurality of elastic members which are arranged in pairs, and the plurality of abutting pieces are arranged side by side.

The disposition of the plurality of abutting pieces allows the qualified batteries of different sizes and quantities to be grabbed flexibly.

In a possible implementation of this disclosure, the tray grabbing apparatus includes a second frame, a third gripping jaw assembly, a fourth gripping jaw assembly, a first drive mechanism, a second drive mechanism, and a second distance adjusting mechanism. The third gripping jaw assembly is disposed on the second frame and provided with a third gripper, the fourth gripping jaw assembly is disposed on the second frame and provided with a fourth gripper, and the third gripper and the fourth gripper are arranged opposite each other and spaced apart. The first drive mechanism is arranged between the second frame and the third gripping jaw assembly and between the second frame and the fourth gripping jaw assembly, and is configured to drive the third gripper and the fourth gripper to simultaneously move between the first workbench and the second workbench. The second drive mechanism is arranged between the first drive mechanism and the third gripping jaw assembly and between the first drive mechanism and the fourth gripping jaw assembly, and is configured to drive the third gripper and the fourth gripper to simultaneously move towards or away from the tray. The second distance adjusting mechanism is arranged between the second drive mechanism and the third gripping jaw assembly and/or between the second drive mechanism and the fourth gripping jaw assembly, and is configured to drive the third gripper and the fourth gripper to move towards or away from each other relative to the second drive mechanism and adjust a distance between the third gripper and the fourth gripper, so that the third gripper and the fourth gripper cooperate to grab the tray.

With the second distance adjusting mechanism disposed, the second distance adjusting mechanism can drive the third gripper and the fourth gripper to move towards or away from each other relative to the second drive mechanism, so as to adjust the distance between the third gripper and the fourth gripper. In this way, the second distance adjusting mechanism can grab trays of different sizes only by adjusting the distance between the third gripper and the fourth gripper, thereby improving the commonality of the tray grabbing apparatus. After the third gripper and the fourth gripper have grabbed the tray through cooperation, a second driver assembly drives the third gripper and the fourth gripper to simultaneously move away from the tray, and a first driver drives the third gripper and the fourth gripper to move from the first workbench to the second workbench. At this time, the second distance adjusting mechanism drives the third gripper and the fourth gripper to move away from each other relative to the second drive mechanism to release the tray on the second workbench. After that, the third gripper and the fourth gripper may be left in the area of the second workbench or moved back to the first workbench under the driving force of the first drive mechanism for grabbing the next tray.

In a possible implementation of this disclosure, the first drive mechanism includes a first driver and a second slide rail assembly, where both the third gripping jaw assembly and the fourth gripping jaw assembly are connected to the second slide rail assembly, the first driver is connected to the second slide rail assembly, and the first driver is configured to drive the second slide rail assembly, consequently driving the third gripper and the fourth gripper to simultaneously move between the first workbench and the second workbench.

With the second slide rail assembly disposed, the first driver is connected to the second slide rail assembly, allowing the third gripper and the fourth gripper to easily move between the first workbench and the second workbench. This reduces the friction during the movement, and has the movement guided and limited.

In a possible implementation of this disclosure, the second slide rail assembly includes a second slide rail disposed on the second frame and a second slider disposed on the third gripping jaw assembly and the fourth gripping jaw assembly, where the second slide rail extends along a direction in which the first workbench and the second workbench are arranged, and the first driver is configured to drive the second slider to slide on the second slide rail.

The second slide rail assembly includes the second slide rail fixed on the second frame and the second slider fixed on the third gripping jaw assembly and/or the fourth gripping jaw assembly. The first driver is configured to drive the second slider to slide on the second slide rail, reducing the friction between the second slider and the second frame. In addition, the second slide rail can also play a role in position limiting.

In a possible implementation of this disclosure, the second drive mechanism includes a second driver and a third slide rail assembly, where both the third gripping jaw assembly and the fourth gripping jaw assembly are connected to the third slide rail assembly, the second driver is connected to the third slide rail assembly, and the second driver is configured to drive the third slide rail assembly, consequently driving the third gripper and the fourth gripper to simultaneously move towards or away from the tray.

With the third slide rail assembly disposed, the second driver is connected to the third slide rail assembly, allowing the third gripper and the fourth gripper to easily move towards or away from the tray simultaneously. This reduces the friction during the movement, and has the movement guided and limited.

In a possible implementation of this disclosure, the third slide rail assembly includes a third slide rail provided with the first drive mechanism and a third slider disposed on the third gripping jaw assembly and the fourth gripping jaw assembly, where the third slide rail extends along a direction forming an included angle with the direction in which the first workbench and the second workbench are arranged, and the second driver is configured to drive the third slider to slide on the third slide rail.

The third slide rail assembly includes the third slide rail fixed on the first drive assembly and the third slider fixed on the third gripping jaw assembly and/or the fourth gripping jaw assembly. The second driver is configured to drive the third slider to slide on the third slide rail, reducing the friction between the third slider and the first drive mechanism. In addition, the third slide rail can also play a role in position limiting.

In a possible implementation of this disclosure, the second distance adjusting mechanism includes a third driver and a fourth slide rail assembly, where the third gripping jaw assembly and the fourth gripping jaw assembly are connected to the fourth slide rail assembly, the third driver is connected to the fourth slide rail assembly, and the third driver is configured to drive the fourth slide rail assembly, consequently driving the third gripper and the fourth gripper to move towards or away from each other relative to the second drive mechanism.

With the fourth slide rail assembly disposed, the third driver is connected to the fourth slide rail assembly, allowing the third gripper and the fourth gripper to easily move towards or away from each other relative to the second drive mechanism. This reduces the friction during the movement, and has the movement guided and limited.

In a possible implementation of this disclosure, the fourth slide rail assembly includes a fourth slide rail disposed on the second drive mechanism and a fourth slider disposed on the third gripping jaw assembly and the fourth gripping jaw assembly, where the fourth slide rail extends along a direction in which the third gripper and the fourth gripper are arranged opposite each other, and the third driver is configured to drive the fourth slider to slide on the fourth slide rail.

The fourth slide rail assembly includes the fourth slide rail fixed on the second drive assembly and the fourth slider fixed on the third gripping jaw assembly and/or the fourth gripping jaw assembly. The third driver is configured to drive the fourth slider to slide on the fourth slide rail, reducing the friction between the fourth slider and the second drive mechanism. In addition, the fourth slide rail can also play a role in position limiting.

A second aspect of this disclosure provides a battery production line. The battery production line includes the battery grabbing device according to any one of the embodiments of the first aspect and a production device, where the production device is configured to produce batteries to be grabbed by the battery grabbing apparatus in the battery grabbing device provided in any one of the embodiments of the first aspect.

The battery production line according to the second aspect of this disclosure includes the battery grabbing device provided in any one of the implementations of the first aspect. Therefore, same technical effects can be achieved. That is, the level of automation of the battery production line is increased accordingly after the battery grabbing device is adopted.

A third aspect of this disclosure provides a control method for a battery grabbing device. The control method is applied to a controller. The battery grabbing device includes a support, a workbench, a battery grabbing apparatus, and a tray grabbing apparatus, and a detection apparatus disposed on the support. The control method includes:
controlling the detection apparatus to detect a tray on the workbench and a battery in the tray, in response to a request for grabbing a qualified battery;
controlling the battery grabbing apparatus to grab the qualified battery based on information detected by the detection apparatus; and
controlling the tray grabbing apparatus to grab the tray on the workbench.

With the detection apparatus disposed on the support, the detection apparatus can detect whether a battery on the workbench is qualified when the battery is placed on the workbench. If the battery is qualified, the battery grabbing apparatus grabs the qualified battery, and if the battery is unqualified, the battery grabbing apparatus does not grab the unqualified battery, thereby ensuring that all batteries grabbed by the battery grabbing apparatus are qualified batteries. This increases the probability of the entire battery grabbing device in grabbing qualified batteries. On this basis, the battery is located in the tray, and after the battery grabbing apparatus grabs the qualified battery, the tray grabbing apparatus can grab the tray. Then, the workbench can carry a new tray, and the new tray is provided with a new battery for the next round of grabbing. This increases the level of automation of the battery grabbing device. Similarly, by using the control method for the battery grabbing device, qualified batteries can be grabbed quickly and accurately, improving the grabbing efficiency of batteries.

In a possible implementation of this disclosure, the detection apparatus includes a first grip camera, and the control method further includes:
controlling the first grip camera to acquire image information of the battery, in response to the request for grabbing the qualified battery, where the image information is used to indicate whether the battery is qualified;
controlling the battery grabbing apparatus to grab the qualified battery, based on the image information acquired by the first grip camera; and
controlling the tray grabbing apparatus to grab the tray on the workbench.

Because cameras have the advantages of ready availability and low cost, the image information of the battery can be acquired by the first grip camera. Then, the image information of the battery acquired by the first grip camera can be used for controlling the battery grabbing apparatus to grab the qualified battery more quickly.

In a possible implementation of this disclosure, the battery grabbing device further includes a first acquisition apparatus disposed on the support, and the control method further includes:
controlling the first acquisition apparatus to acquire status information of the qualified battery, based on the information detected by the detection apparatus, where the status information is used to indicate at least one of size information of the qualified battery and position information of the qualified battery;
controlling the battery grabbing apparatus to grab the qualified battery, based on the information detected by the detection apparatus and the status information of the qualified battery; and
controlling the tray grabbing apparatus to grab the tray on the workbench.

The first acquisition apparatus is disposed to acquire the status information of the qualified battery, and the detected information for checking whether a battery is qualified is provided. In this case, the battery grabbing apparatus can be controlled to accurately grab the qualified battery based on the information detected by the detection apparatus and the status information of the qualified battery.

In a possible implementation of this disclosure, the first acquisition apparatus includes a second grip camera and a position acquisition piece, and the control method further includes:
controlling the second grip camera to acquire the size information of the qualified battery and the position acquisition piece to acquire the position information of the qualified battery, based on the information detected by the detection apparatus;
controlling the grabbing apparatus to grab the qualified battery, based on the size information of the qualified battery acquired by the second grip camera, the position information of the qualified battery acquired by the position acquisition piece, and the information detected by the detection apparatus; and
controlling the tray grabbing apparatus to grab the tray on the workbench.

With the second grip camera disposed for acquiring the size information of the qualified battery and the position acquisition piece disposed for acquiring the position information of the qualified battery, the status information of the qualified battery can be accurately acquired, so that the battery grabbing apparatus is controlled to grab the qualified battery more accurately.

In a possible implementation of this disclosure, the battery grabbing device further includes a second acquisition apparatus disposed on the support, and the control method further includes:
controlling the second acquisition apparatus to acquire layer information of the tray;
controlling the battery grabbing apparatus to grab the qualified battery, based on the acquired status information of the qualified battery and the layer information of the tray; and
controlling the tray grabbing apparatus to grab the tray on the workbench, based on the layer information of the tray.

With the second acquisition apparatus disposed, the second acquisition apparatus is configured to acquire the layer information of the tray, and the first acquisition apparatus acquires the status information of the qualified battery. In this case, the second acquisition apparatus and the first acquisition apparatus can face each other, so that the size information of the qualified battery can be obtained more accurately. This enables the battery grabbing apparatus to grab qualified batteries accurately and the tray grabbing apparatus to grab trays accurately.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the purposes of the preferred implementations, and should not be construed as a limitation on this disclosure. Moreover, throughout the accompanying drawings, the same reference signs represent the same parts. In the accompanying drawings:
FIG. 1 is a schematic diagram of a three-dimensional structure of a battery grabbing device according to an embodiment of this disclosure;
FIG. 2 is a front view of a battery grabbing device according to an embodiment of this disclosure;
FIG. 3 is a side view of a battery grabbing device according to an embodiment of this disclosure;
FIG. 4 is a top view of a partial structure of a battery grabbing device according to an embodiment of this disclosure;
FIG. 5 is a front view of a partial structure of a battery grabbing device according to an embodiment of this disclosure;
FIG. 6 is a schematic diagram of a structure of a battery grabbing apparatus according to an embodiment of this disclosure;
FIG. 7 is a first flowchart of a control method for a battery grabbing device according to an embodiment of this disclosure;
FIG. 8 is a second flowchart of a control method for a battery grabbing device according to an embodiment of this disclosure;
FIG. 9 is a third flowchart of a control method for a battery grabbing device according to an embodiment of this disclosure;
FIG. 10 is a fourth flowchart of a control method for a battery grabbing device according to an embodiment of this disclosure; and
FIG. 11 is a fifth flowchart of a control method for a battery grabbing device according to an embodiment of this disclosure.

### Reference signs

1: workbench; 11: inlet; 12: outlet; 13: first access frame; 14: second access frame; 2: battery grabbing apparatus; 21: first frame; 22: first gripping jaw assembly; 23: second gripping jaw assembly; 24: gripper driver; 25: first distance adjusting mechanism; 26: first slide rail assembly; 3: tray grabbing apparatus; 31: second frame; 32: third gripping jaw assembly; 33: fourth gripping jaw assembly; 34: first drive mechanism; 35: second drive mechanism; 4: tray; 5: battery; 6: support; 7: detection apparatus; 8: first acquisition apparatus; 81: second grip camera; 82: position acquisition piece; 83: height acquisition piece; and 9: second acquisition apparatus.

### DESCRIPTION OF EMBODIMENTS

The following describes in detail the embodiments of technical solutions of this disclosure with reference to the accompanying drawings. The following embodiments are merely intended for a clearer description of the technical solutions of this disclosure and therefore are used as just examples which do not constitute any limitations on the protection scope of this disclosure.

Unless otherwise defined, all technical and scientific terms used herein shall have the same meanings as commonly understood by those skilled in the art to which this disclosure belongs. The terms used herein are intended to merely describe the specific embodiments rather than to limit this disclosure. The terms "include", "comprise", and "have" and any other variations thereof in the specification and brief description of drawings of this disclosure are intended to cover non-exclusive inclusions.

In the description of the embodiments of this disclosure, the terms "first", "second", "third", and the like are merely intended to distinguish between different objects, and shall not be understood as any indication or implication of relative importance or any implicit indication of the number, sequence or primary-secondary relationship of the technical features indicated. In the description of the embodiments of this disclosure, "a plurality of" means at least two unless otherwise specifically stated.

In this specification, reference to "embodiment" means that specific features, structures or characteristics described with reference to the embodiment may be incorporated in at least one embodiment of this disclosure. The word "embodiment" appearing in various places in the specification does not necessarily refer to the same embodiment, or an independent or alternative embodiment that is exclusive of other embodiments. Persons skilled in the art explicitly and implicitly understand that the embodiments described herein may be combined with other embodiments.

In the description of the embodiments of this disclosure, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates "or" relationship between contextually associated objects.

In the description of the embodiments of this disclosure, the orientations or positional relationships indicated by the technical terms "length", "width", "thickness", "upper", "lower", "front", "rear", "left", "right", "vertical", "horizontal", "top", "bottom", "inside", "outside", "circumferential", and the like are based on the orientations or positional relationships as shown in the accompanying drawings. These terms are merely for ease and brevity of description of the embodiments of this disclosure rather than indicating or implying that the means or components mentioned must have specific orientations or must be constructed, manipulated, or used according to specific orientations, and therefore shall not be construed as any limitations on embodiments of this disclosure.

In the description of the embodiments of this disclosure, unless otherwise specified and defined explicitly, the technical terms "mounting", "connection", "join", and "fastening" should be understood in their general senses. For example, they may refer to a fixed connection, a detachable connection, or an integral connection, may refer to a mechanical connection or electrical connection, and may refer to a direct connection, an indirect connection via an intermediate medium, or an interaction between two elements. Persons of ordinary skill in the art can understand specific meanings of these terms used in the embodiments of this disclosure as appropriate to specific situations.

In the description of the embodiments of this disclosure, unless otherwise specified and defined explicitly, the technical term "contact" should be understood in its general sense, which may be direct contact, contact via an intermediate medium layer, contact with no acting force on each other, or contact with an acting force on each other.

The following describes in detail this disclosure.

At present, new energy batteries are used more extensively in our life and industries. New energy has been widely used in energy storage power supply systems such as hydroelectric power plants, thermal power plants, wind power plants, and solar power plants, as well as in many other fields including electric transportation tools such as electric bicycles, electric motorcycles, and electric vehicles. To improve the production efficiency, a battery grabbing device is provided for grabbing batteries quickly to save time.

In the related art, after the battery grabbing apparatus of the battery grabbing device grabs a battery or a qualified battery, the tray is still left on the workbench and needs to be removed manually. Therefore, the battery grabbing device has a low level of automation. In addition, the battery grabbing apparatus grabs batteries regardless of whether they are qualified. Therefore, how to continuously grab qualified batteries in an automated manner is one of the problems to be solved in the industry.

An embodiment of this disclosure provides a battery grabbing device. The battery grabbing device includes a support, a workbench, a detection apparatus, a battery grabbing apparatus, and a tray grabbing apparatus, where the workbench is configured to carry a tray and a battery in the tray, the detection apparatus is disposed on the support and configured to detect whether the battery on the workbench is qualified, the battery grabbing apparatus is configured to grab the qualified battery, and the tray grabbing apparatus is at least configured to grab the tray after the battery grabbing apparatus grabs the qualified battery. The detection apparatus can detect whether a battery on the workbench is qualified when the battery is placed on the workbench. If the battery is qualified, the battery grabbing apparatus grabs the qualified battery, and if the battery is unqualified, the battery grabbing apparatus does not grab the unqualified battery, thereby ensuring that all batteries grabbed by the battery grabbing apparatus are qualified batteries. This increases the probability of the entire battery grabbing device in grabbing qualified batteries. On this basis, the battery is located in the tray, and after the battery grabbing apparatus grabs the qualified battery, the tray grabbing apparatus can grab the tray. Then, the workbench can carry a new tray, and the new tray is provided with a new battery for the next round of grabbing. This increases the level of automation of the battery grabbing device.

In the embodiments of this disclosure, the battery grabbing device does not limit the types of batteries to be grabbed. For example, the battery grabbing device can be used to grab battery cells on a production line for conversion between battery cells and battery modules, or can be used to grab battery modules on a production line for conversion between battery modules and battery packs.

The following describes in detail the embodiments of this disclosure, with reference to the accompanying drawings.

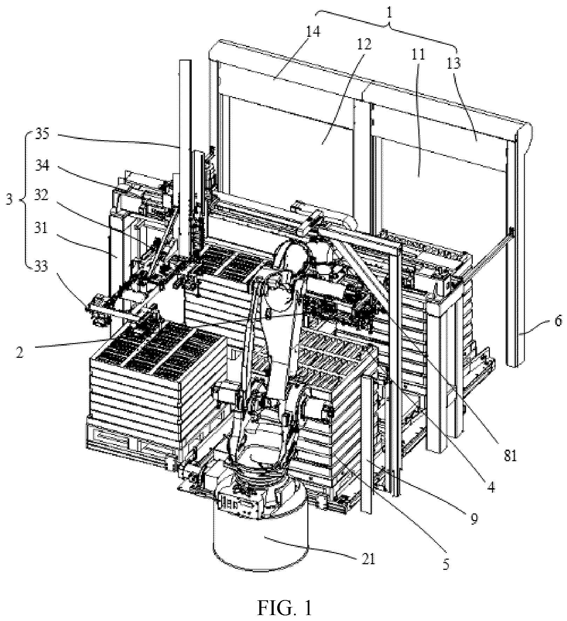

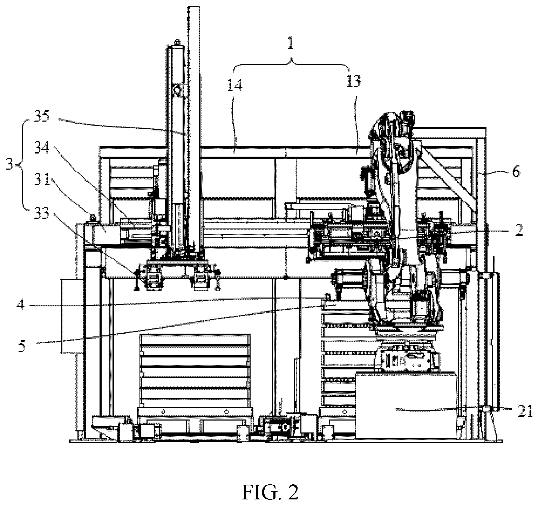

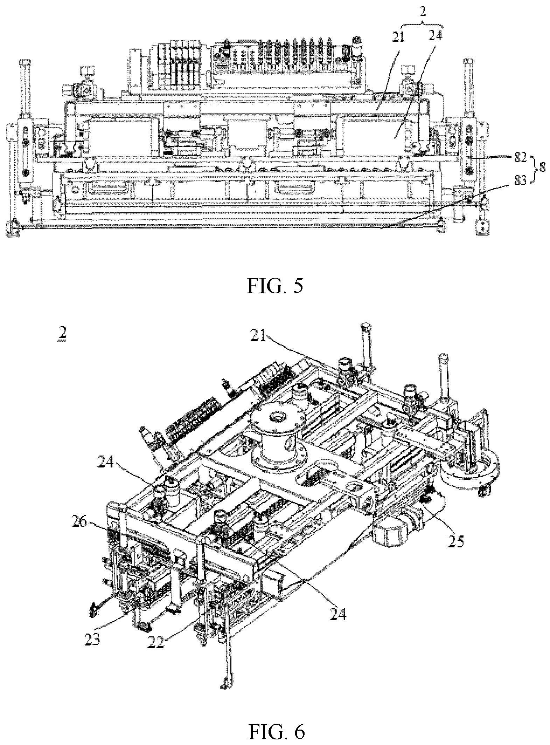

An embodiment of this disclosure provides a battery grabbing device. Referring to FIG. 1 to FIG. 6, the battery grabbing device includes a support 6, a workbench 1, a detection apparatus 7, a battery grabbing apparatus 2, and a tray grabbing apparatus 3, where the workbench 1 is configured to carry a tray 4 and a battery 5 in the tray 4, the detection apparatus 7 is disposed on the support 6 and configured to detect whether the battery 5 on the workbench 1 is qualified, the battery grabbing apparatus 2 is configured to grab the qualified battery 5, and the tray grabbing apparatus 3 is at least configured to grab the tray 4 after the battery grabbing apparatus 2 grabs the qualified battery 5.

In this embodiment of this disclosure, the battery grabbing device is a production line module with the workbench 1, the battery grabbing apparatus 2, the tray grabbing apparatus 3, and the detection apparatus 7, which may be an entire production line including the workbench 1, the battery grabbing apparatus 2, the tray grabbing apparatus 3, and the detection apparatus 7, or a production line station including the workbench 1, the battery grabbing apparatus 2, the tray grabbing apparatus 3, and the detection apparatus 7. For example, the battery grabbing device is a feeding station for batteries 5 in bulk.

In an embodiment of this disclosure, the battery 5 may be a single battery 5 or a grouped battery 5, for example, a plurality of batteries 5 arranged in a group. The battery 5 may be a prismatic battery cell.

In an embodiment of this disclosure, the workbench 1 may be any working platform carrying the battery 5, for example, an area with a conveying mechanism, where the conveying mechanism is linked with the entire production line.

In an embodiment of this disclosure, the detection apparatus 7 is configured to detect whether the battery 5 on the workbench 1 is qualified. The detection apparatus 7 may detect whether the battery 5 on the workbench 1 is qualified in the following manners. Each battery 5 is assigned a quick response code, where the quick response code stores information of the battery 5. The detection apparatus 7 is a camera, which can obtain the information of the battery 5 by scanning the quick response code, and determines whether the battery 5 is qualified based on the obtained information of the battery 5. Alternatively, each battery 5 is assigned a first mark, and the detection apparatus 7 is provided with a second mark matching the corresponding mark. If the first mark matches the second mark, it means that the battery 5 is a qualified battery 5; if not, it means that the battery 5 is an unqualified battery 5. It should be further noted herein that the detection apparatus 7 may detect whether a battery 5 on the workbench 1 is qualified by other means. This is not particularly limited in this embodiment of this disclosure.

In an embodiment of this disclosure, the detection apparatus 7 is disposed on the support 6 and configured to detect whether a battery 5 on the workbench 1 is qualified. Whether the battery 5 is qualified may be determined based on whether the battery 5 has passed one or several previous processes, whether the battery 5 has undergone a complete process, or the like. It should be further noted herein that the criteria for determining whether the battery 5 is qualified are not limited in this embodiment of this disclosure.

In an embodiment of this disclosure, the battery 5 is placed in the tray 4, and each tray 4 may be provided with one or a plurality of batteries 5, where the plurality of batteries 5 may be arranged in disorder or uniformly distributed in the tray 4. This is not limited in this embodiment of this disclosure. In an implementation provided in this embodiment of this disclosure, a plurality of batteries 5 are provided, and the plurality of batteries 5 are uniformly distributed in the tray 4.

In an embodiment of this disclosure, the tray grabbing apparatus 3 is at least configured to grab the tray 4, so the tray grabbing apparatus 3 may be configured to only grab the tray 4 or may be configured to grab the tray 4 and transport the tray 4 to other positions. Certainly, the tray grabbing apparatus 3 may further perform other operations, which is not limited in this embodiment of this disclosure.

In the foregoing battery grabbing device, the detection apparatus 7 is disposed on the support 6, and the detection apparatus 7 can detect whether a battery 5 on the workbench 1 is qualified when the battery 5 is placed on the workbench 1. If the battery 5 is qualified, the battery grabbing apparatus 2 grabs the qualified battery 5, and if the battery 5 is unqualified, the battery grabbing apparatus 2 does not grab the unqualified battery 5, thereby ensuring that all batteries 5 grabbed by the battery grabbing apparatus 2 are qualified batteries 5. This increases the probability of the entire battery grabbing device in grabbing qualified batteries 5. On this basis, the battery 5 is located in the tray 4, and after the battery grabbing apparatus 2 grabs the qualified battery 5, the tray grabbing apparatus 3 can grab the tray 4. Then, the workbench 1 can carry a new tray 4, and the new tray 4 is provided with a new battery 5 for the next round of grabbing. In the related art, after the battery grabbing apparatus grabs a battery or qualified battery, the tray is still left on the workbench and needs to be removed from the workbench manually. Therefore, the battery grabbing device has a low level of automation. However, in this disclosure, the tray grabbing apparatus 3 is disposed. Therefore, after the battery grabbing apparatus 2 grabs the qualified battery 5, the tray grabbing apparatus 3 at least grabs the tray 4, without a need for manual grabbing. This increases the level of automation of the battery grabbing device.

In a possible implementation provided in this embodiment of this disclosure, referring to FIG. 1 to FIG. 6, the detection apparatus 7 includes a first grip camera, and the first grip camera is configured to acquire image information of the battery 5, where the image information is used to indicate whether the battery is qualified.

In this embodiment of this disclosure, the first grip camera is configured to acquire the image information of the battery 5, and the first grip camera may be a device with photographing and video recording functions. The image information may be a photo, a video, or the like. By means of shooting with the first grip camera, the photo and video of the battery 5 can be obtained, and then the corresponding image information can be acquired. For example, a battery 5 has a quick response code, and the quick response code contains specific information of the battery 5. The first grip camera obtains the specific information of the battery 5 by scanning the quick response code, and then checks or determines whether the battery 5 is a qualified battery 5 based on the specific information of the battery 5.

In the foregoing battery grabbing device, because cameras have the advantages of ready availability and low cost, the detection apparatus 7 includes the first grip camera, and the first grip camera is configured to acquire the image information of the battery 5. Whether the battery 5 is a qualified battery 5 is determined based on the image information of the battery 5.

In a possible implementation provided in this embodiment of this disclosure, referring to FIG. 1 to FIG. 6, the battery grabbing device further includes a first acquisition apparatus 8, and the first acquisition apparatus 8 is disposed on the support 6 and configured to acquire status information of the qualified battery 5 on the workbench 1, where the status information is used to indicate at least one of size information of the qualified battery 5 and position information of the qualified battery 5.

In this embodiment of this disclosure, the first acquisition apparatus 8 is configured to acquire the status information of the qualified battery 5 on the workbench 1. The way how the first acquisition apparatus 8 acquire the status information of the qualified battery 5 on the workbench 1 may be shooting with a camera, measuring with a measuring instrument, or the like. It should be further noted herein that this embodiment of this disclosure does not limit the way how the first acquisition apparatus 8 acquires the status information of the qualified battery 5 on the workbench 1.

In an embodiment of this disclosure, the status information of the qualified battery 5 includes size information of the qualified battery 5, for example, the length, width, and height of the qualified battery 5, whether the qualified battery 5 is tilted, and whether the qualified battery 5 is excessively high. Whether the qualified battery 5 is excessively high is determined based on whether the height of the qualified battery 5 is greater than the height reachable by the battery grabbing apparatus 2. Being excessively high, the qualified battery 5 cannot be grabbed.

In the battery grabbing device, the battery grabbing apparatus 2 needs to grab the qualified battery 5, but it cannot determine the status information of the qualified battery 5. Therefore, the battery grabbing device further includes the first acquisition apparatus 8 disposed on the support 6, which is configured to acquire the status information of the qualified battery 5 on the workbench 1. In this case, the qualified battery 5 can be accurately grabbed through cooperation between the first acquisition apparatus 8 and the battery grabbing apparatus 2.

In a possible implementation provided in this embodiment of this disclosure, referring to FIG. 1 to FIG. 6, the first acquisition apparatus 8 includes a second grip camera 81, and the second grip camera 81 is configured to acquire the size information of the qualified battery 5.

In this embodiment of this disclosure, the second grip camera 81 is configured to acquire the size information of the qualified battery 5. The second grip camera 81 may be a device with photographing and video recording functions. The image information may be a photo, a video, or the like. By means of shooting with the second grip camera 81, the image information of the qualified battery 5 can be acquired, and then the size of the qualified battery 5 can be obtained.

In this embodiment of this disclosure, the second grip camera 81 is configured to acquire the size information of the qualified battery 5, where the size information may include the length, width, height, and the like of the qualified battery 5. On this basis, to further confirm the height of the qualified battery, the first acquisition apparatus may further include a height acquisition piece 83, where the height acquisition piece 83 is configured to acquire height information of the qualified battery 5. For example, the height acquisition piece 83 may be a scale arranged along a height direction of the qualified battery 5, and the height information of the qualified battery 5 is acquired by comparing the scale with the height of the qualified battery 5. Through cooperation between the height acquisition piece 83 and the second grip camera 81, the exact height of the qualified battery 5 can be obtained, so as to determine whether the qualified battery 5 is excessively high.

In the foregoing battery grabbing device, because cameras have the advantages of ready availability and low cost, the first acquisition apparatus 8 includes the second grip camera 81, and the second grip camera 81 is configured to acquire the size information of the qualified battery 5. The size information may include the length, width, height, and the like of the qualified battery 5. In this case, the qualified battery 5 can be accurately grabbed through further cooperation between the first acquisition apparatus 8 and the battery grabbing apparatus 2.

In a possible implementation provided in this embodiment of this disclosure, referring to FIG. 1 to FIG. 6, the first acquisition apparatus 8 includes a position acquisition piece 82, and the position acquisition piece 82 is configured to acquire position information of the qualified battery 5.

In this embodiment of this disclosure, the position information of the qualified battery 5 acquired by the position acquisition piece 82 may include whether the qualified battery 5 is tilted. The position acquisition piece 82 may emit an infrared ray along a vertical direction of the qualified battery 5. If the qualified battery 5 is parallel to the infrared ray emitted by the position acquisition piece 82 in the vertical direction, the qualified battery 5 is not tilted. It should be further noted herein that this disclosure does not limit the way how the position acquisition piece 82 acquire the position information of the qualified battery 5 and specific position.

In the foregoing battery grabbing device, the second grip camera 81 is configured to acquire only the size information of a qualified battery 5, but it cannot acquire the position information of the qualified battery 5. Therefore, the first acquisition apparatus 8 includes the position acquisition piece 82 for acquiring the position information of the qualified battery 5. In this case, the qualified battery 5 can be accurately grabbed through further cooperation between the first acquisition apparatus 8 and the battery grabbing apparatus 2.

In a possible implementation provided in this embodiment of this disclosure, referring to FIG. 1 to FIG. 6, the battery grabbing device further includes a second acquisition apparatus 9, the second acquisition apparatus 9 is disposed on the support 6, and the second acquisition apparatus 9 is configured to acquire layer information of the tray 4.

In this embodiment of this disclosure, the second acquisition apparatus 9 is configured to acquire the layer information of the tray 4. The way how the second acquisition apparatus 9 acquires the layer information of the tray 4 is not limited in this embodiment of this disclosure. For example, the second acquisition apparatus 9 may provide a scale along a stacking direction of the trays 4, so as to acquire the height of the overall height of trays 4 and the height of each tray 4. Then, the number of layers of trays 4 can be obtained based on the overall height of trays 4 and the height of each tray 4. For another example, the second acquisition apparatus 9 includes a servo motor and sensors. The servo motor drives the sensors for inspection layer by layer, and positions of the sensors are not adjusted with the change of the number of layers of trays 4. In addition, a small number of sensors are used, which reduces the failure rate of the sensors.

In the foregoing battery grabbing device, the second acquisition apparatus 9 is disposed, the second acquisition apparatus 9 is configured to acquire the layer information of the tray 4, and the second grip camera 81 can acquire the size information of the qualified battery 5. In this case, the second acquisition apparatus 9 and the second grip camera 81 can face each other, so that the height of the qualified battery 5 can be obtained more accurately. This enables the battery grabbing apparatus 2 to grab qualified batteries 5 accurately and the tray grabbing apparatus 3 to grab trays 4 accurately.

It should be explained that the second acquisition apparatus 9 and the second grip camera 81 can face each other, meaning that the layer information of the tray 4 can be determined based on height information in the size information of the qualified battery 5 acquired by the second grip camera 81. In this way, the second acquisition apparatus 9 can also acquire the layer information of the tray 4, and the two pieces of information can be compared for correction. For example, if within an acceptable error range, the information acquired by the second grip camera 81 and the second acquisition apparatus 9 is accurate; if beyond the acceptable error range, the user should be reminded to inspect and repair the second grip camera 81 and the second acquisition apparatus 9.

In a possible implementation provided by this embodiment of this disclosure, referring to FIG. 1 to FIG. 6, the workbench 1 includes a first workbench and a second workbench, the first workbench is configured to carry the tray 4 and the battery 5 in the tray 4, and after the battery grabbing apparatus 2 grabs the qualified battery 5 on the first workbench, the tray grabbing apparatus 3 grabs the tray 4 on the first workbench and transports it to the second workbench.

In this embodiment of this disclosure, a size relationship between the first workbench and the second workbench is not limited in this embodiment of this disclosure. The first workbench may be larger than the second workbench, smaller than the second workbench, and equal to the second workbench in size. Similarly, this embodiment of this disclosure does not limit shapes of the first workbench and the second workbench. The first workbench and the second workbench may be both in regular shapes, one in a regular shape and the other in an irregular shape, or both in irregular shapes. In addition, whether the first workbench communicates with the second workbench is not limited in this embodiment of this disclosure. In other words, relative positions of the first workbench and the second workbench are not limited. It is only required that the first workbench can carry the tray 4 and the battery 5 in the tray 4 and the second workbench can carry the tray 4 grabbed by the tray grabbing apparatus 3.

In the foregoing battery grabbing device, the first workbench is disposed, the first workbench is configured to carry the tray 4 and the battery 5 in the tray 4, and the second workbench is configured to carry the tray 4 grabbed by the tray grabbing apparatus 3. With the two workbenches arranged separately, the battery grabbing device can be controlled and operated conveniently.

In a possible implementation provided in this embodiment of this disclosure, referring to FIG. 1 to FIG. 6, the workbench 1 further includes a first transport platform and a second transport platform, where the first transport platform is configured to transport the tray 4 and the battery 5 in the tray 4 to the first workbench, and the second transport platform is configured to transport the tray 4 on the second workbench to other positions.

In this embodiment of this disclosure, the first transport platform is configured to transport the tray 4 and the battery 5 in the tray 4 to the first workbench. The first transport platform may be provided with a belt pulley, and the belt pulley brings the tray 4 and the battery 5 in the tray 4 to the first workbench. The first transport platform may be provided with a plurality of rotatable rollers, the tray 4 and the battery 5 in the tray 4 are placed on the rotatable rollers, and a motor drives the rollers to rotate to bring the tray 4 and the battery 5 in the tray 4 to the first transport platform. Certainly, the first transport platform may alternatively be provided with other types of transport apparatuses, which is not limited in this embodiment of this disclosure.

In this embodiment of this disclosure, the second transport platform transports the tray 4 on the second workbench to other positions. The second transport platform may be provided with a belt pulley, and the belt pulley brings the tray 4 to other positions. The second transport platform may be provided with a plurality of rotatable rollers, the tray 4 on the second workbench is placed on the rotatable rollers, and a motor drives the rollers to rotate to bring the tray 4 on the second transport platform to other positions. Certainly, the second transport platform may alternatively be provided with other types of transport apparatuses, which is not limited in this embodiment of this disclosure.

In the foregoing battery grabbing device, the first transport platform is disposed to transport the tray 4 and the battery 5 in the tray 4 to the first workbench, and the second transport platform is disposed to transport the tray 4 on the second workbench to other positions. Therefore, less time and manpower are required.

In a possible implementation provided in this embodiment of this disclosure, referring to FIG. 1 to FIG. 6, the workbench 1 is further provided with an inlet 11 and an outlet 12. The battery 5 in the tray 4 to be grabbed can reach the grabbing position through the inlet 11, and the remaining tools (such as the tray 4) can be removed through the outlet 12 after the grabbing is completed.

In this embodiment of this disclosure, relative positions and shapes of the inlet 11 and the outlet 12 are not limited. The inlet 11 and the outlet 12 may be arranged on two opposite sides of the operation area or on one side of the workbench 1. The inlet 11 and the outlet 12 may be both in regular shapes or irregular shapes, or one in an irregular shape and the other in a regular shape. For example, the inlet 11 and the outlet 12 are arranged on one side of the workbench 1. To be specific, the inlet 11 is disposed on the first transport platform and the outlet 12 is disposed on the second transport platform.

In an embodiment of this disclosure, a first access frame 13 may be disposed on the first transport platform, and a second access frame 14 is disposed on the second transport platform. The inlet 11 is formed on the first access frame 13, and the outlet 12 is formed on the second access frame 14.

The specific circulation process of the battery grabbing device is as follows. The tray 4 and the battery 5 in the tray 4 reach the first transport platform through the inlet 11, the first transport platform transports the tray 4 and the battery 5 in the tray 4 to the first workbench, the detection apparatus 7 detects whether the battery 5 on the first workbench is qualified, the battery grabbing apparatus 2 grabs the qualified battery 5 on the first workbench based on the information detected by the detection apparatus 7, after the battery grabbing apparatus 2 grabs the qualified battery 5 on the first workbench, the tray grabbing apparatus 3 grabs the tray 4 on the first workbench and transports it to the second workbench, and the second transport platform transports the tray 4 on the second workbench through the outlet 12. The tray 4 is removed through the outlet 12 for future use.

For the purpose of operation safety, two safety access assemblies are respectively arranged between the inlet 11 and an operation position and between the outlet 12 and an operation position, so as to check whether a foreign object (for example, a part of human body) enters the operation position and determine whether the gripping operation can be performed. When a foreign object is detected, grabbing is prohibited, thereby ensuring safe production.

In a possible implementation provided in this embodiment of this disclosure, referring to FIG. 1 to FIG. 6, the battery grabbing apparatus 2 includes a first frame 21, a first gripping jaw assembly 22, a second gripping jaw assembly 23, a gripper driver 24, and a first distance adjusting mechanism 25. The first gripping jaw assembly 22 is disposed on the first frame 21 and provided with a first gripper, the second gripping jaw assembly 23 is disposed on the first frame 21 and provided with a second gripper, and the first gripper and the second gripper are arranged opposite each other and spaced apart. The gripper driver 24 is configured to drive the first gripper and/or the second gripper to move so that the first gripper and the second gripper move towards each other, where the first gripper and the second gripper cooperate to grip the qualified battery 5. The first distance adjusting mechanism 25 is arranged between the first frame 21 and the first gripping jaw assembly 22 and/or between the first frame 21 and the second gripping jaw assembly 23, and is configured to drive the first gripping jaw assembly 22 and the second gripping jaw assembly 23 to move towards or away from each other relative to the first frame 21, so as to adjust a distance between the first gripping jaw assembly 22 and the second gripping jaw assembly 23.

In this embodiment of this disclosure, the first frame 21 is a frame supporting the entire structure, and can be arranged based on the actual situation. Components of the battery grabbing apparatus 2 are fixed to the first frame 21. In some embodiments, the battery grabbing apparatus 2 may be called a gripper, which belongs to a gripping robot and is configured to grab qualified batteries 5.

In this embodiment of this disclosure, the first gripping jaw assembly 22 and the second gripping jaw assembly 23 may be two opposite systems arranged on two opposite sides of the qualified battery 5 respectively. When grabbing the qualified battery 5, the first gripper of the first gripping jaw assembly 22 and the second gripper of the second gripping jaw assembly 23 abut against the two opposite sides of the qualified battery 5 respectively to grip the qualified battery 5.

In this embodiment of this disclosure, one or more gripper drivers 24 may be provided. For example, one gripper driver 24 is provided and configured to drive the first gripper and the second gripper to move. Alternatively, two gripper drivers 24 are provided, and the two gripper drivers 24 are disposed on the first gripping jaw assembly 22 and the second gripping jaw assembly 23 respectively to drive the first gripper and the second gripper to move independently.

In this embodiment of this disclosure, the first distance adjusting mechanism 25 is configured to adjust the distance between the first gripping jaw assembly 22 and the second gripping jaw assembly 23, while the gripper driver 24 acts only on the first gripper and/or the second gripper. In other words, the first distance adjusting mechanism 25 and the gripper driver 24 are independent of each other.

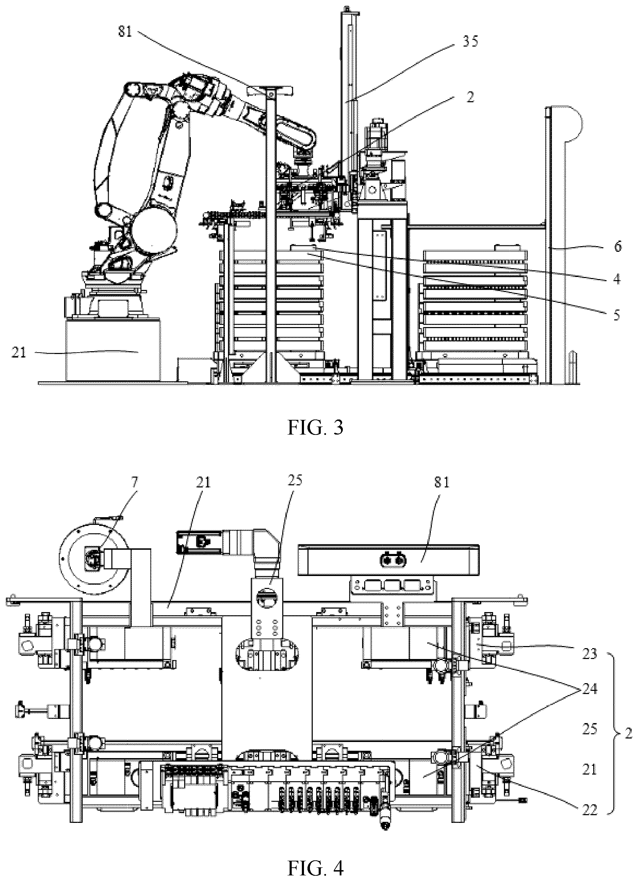

In an embodiment of this disclosure, the first frame 21 may include a base of the battery grabbing apparatus 2 shown in FIG. 1, FIG. 2, and FIG. 3, and the first frame 21 may further include a frame structure connected to one or more of the first gripping jaw assembly 22, the second gripping jaw assembly 23, the gripper driver 24, and the first distance adjusting mechanism 25 shown in FIG. 4, FIG. 5, and FIG. 6, or any combination thereof. In other words, the first frame 21 shown in FIG. 1, FIG. 2, and FIG. 3 is part of the first frame 21 provided in this embodiment of this disclosure. Similarly, the first frame 21 shown in FIG. 4, FIG. 5, and FIG. 6 is also part of the first frame 21 provided in this embodiment of this disclosure. However, the first frame 21 in this embodiment of this disclosure is not limited to be including only the first frame 21 shown in FIG. 1, FIG. 2, and FIG. 3 and the first frame 21 shown in FIG. 4, FIG. 5, and FIG. 6.

In the foregoing battery grabbing device, the first gripping jaw assembly 22 and the second gripping jaw assembly 23 are disposed on the first frame 21, and the first gripper and the second gripper can move towards each other under the driving force of the gripper driver 24, so as to grip the qualified battery 5. However, the distance between the first gripper and the second gripper is limited by the structural space of the first gripping jaw assembly 22 and the second gripping jaw assembly 23, qualified batteries 5 of different specifications or sizes may not be grabbed. For grabbing the qualified batteries 5 of different specifications or sizes, the first distance adjusting mechanism 25 is arranged between the first frame 21 and the first gripping jaw assembly 22 and/or between the first frame 21 and the second gripping jaw assembly 23 to directly adjust the distance between the first gripping jaw assembly 22 and the second gripping jaw assembly 23. In this way, the distance between the first gripper and the second gripper can be adjusted within a wider range, allowing the qualified batteries 5 of more varied specifications or sizes to be grabbed.

In a possible implementation provided in this embodiment of this disclosure, referring to FIG. 1 to FIG. 6, the first distance adjusting mechanism 25 includes a rotation driver and a transmission mechanism, where an input end of the transmission mechanism is drivingly connected to the rotation driver, and an output end of the transmission mechanism is drivingly connected to the first gripping jaw assembly 22 and/or the second gripping jaw assembly 23, where the transmission mechanism is configured to convert rotary torque of the rotation driver into linear motion and transmit the linear motion to the first gripping jaw assembly 22 and/or the second gripping jaw assembly 23.

In this embodiment of this disclosure, the rotation driver is a mechanism that provides torque through rotation, for example, an apparatus such as a motor. The transmission mechanism is configured to convert the rotary torque of the rotation driver into linear motion, allowing the first gripping jaw assembly 22 and/or the second gripping jaw assembly 23 to move linearly under the driving force generated due to the rotary torque of the rotation driver.

In this embodiment of this disclosure, the output end of the transmission mechanism can be drivingly connected to the first gripping jaw assembly 22 and/or the second gripping jaw assembly 23 in three ways: the output end of the transmission mechanism is drivingly connected to the first gripping jaw assembly 22, the output end of the transmission mechanism is drivingly connected to the second gripping jaw assembly 23, and the output end of the transmission mechanism is drivingly connected to both the first gripping jaw assembly 22 and the second gripping jaw assembly 23.

In this embodiment of this disclosure, the rotation driver may be a stepper motor for providing torque, and a mechanism such as a reducer may also be provided for output. The transmission mechanism may be one of the following mechanisms capable of converting the rotary torque into linear motion, for example, a connecting rod mechanism with a crank, a rack-and-pinion mechanism, a worm gear mechanism, and a screw-nut mechanism.

In this embodiment of this disclosure, the output end of the transmission mechanism may be drivingly connected to the first gripping jaw assembly 22 and the second gripping jaw assembly 23 as follows. The transmission mechanism is provided with two output ends, and the two output ends are drivingly connected to the first gripping jaw assembly 22 and the second gripping jaw assembly 23 respectively. Alternatively, the transmission mechanism is provided with one output end, and the output end is drivingly connected to both the first gripping jaw assembly 22 and the second gripping jaw assembly 23. For example, the output end of the transmission mechanism is drivingly connected to the first gripping jaw assembly 22 and the second gripping jaw assembly 23. In a case that the rotation driver is a stepper motor, the transmission mechanism is formed by a lead screw and two nuts, and internal threads of the two nuts rotate in opposite directions, the first gripping jaw assembly 22 and the second gripping jaw assembly 23 are drivingly connected to the two nuts respectively. In this way, the first gripping jaw assembly 22 and the second gripping jaw assembly 23 can be driven to move linearly towards or away from each other relative to the first frame 21.

In the foregoing battery grabbing device, the rotation driver is a mechanism that provides torque through rotation, for example, an apparatus such as a motor. The transmission mechanism is configured to convert the rotary torque of the rotation driver into linear motion, allowing the first gripping jaw assembly 22 and/or the second gripping jaw assembly 23 to move linearly under the driving force generated due to the rotary torque of the rotation driver. The linear motion is simple and easy to understand. In this way, the qualified batteries 5 of more varied specifications and sizes can be grabbed.

In a possible implementation provided in this embodiment of this disclosure, referring to FIG. 1 to FIG. 6, the transmission mechanism includes a transmission rod having a screw thread and a screw thread disposed on the first gripping jaw assembly 22 and/or the second gripping jaw assembly 23, where the transmission rod is permanently connected to the rotation driver, the screw thread of the transmission rod matches the screw thread on the first gripping jaw assembly 22 and/or the second gripping jaw assembly 23, and the rotation driver is configured to drive the transmission rod to rotate so as to drive the first gripping jaw assembly 22 and the second gripping jaw assembly 23 to move towards or away from each other relative to the first frame 21.

In this embodiment of this disclosure, the transmission mechanism is an implementation of the lead screw and nut mechanism.

In the battery grabbing device, the transmission mechanism includes the transmission rod having the screw thread and the screw thread disposed on the first gripping jaw assembly 22 and/or the second gripping jaw assembly 23. Regarding the cooperation between the transmission rod and the screw thread, the accuracy of linear motion can be controlled based on a spacing between the screws, a speed of linear motion can be controlled depending on the rotation speed of the transmission rod, and a distance of linear motion can be controlled depending on the rotation turns or rotation arc length of the transmission rod. In this way, accurate control can be implemented, with high transmission efficiency and accuracy.

In a possible implementation provided in this embodiment of this disclosure, referring to FIG. 1 to FIG. 6, the first distance adjusting mechanism 25 further includes a first slide rail assembly 26, and the first gripping jaw assembly 22 and/or the second gripping jaw assembly 23 are slidably connected to the first frame 21 through the first slide rail assembly 26.

In this embodiment of this disclosure, the first slide rail assembly 26 is a structure allowing the first gripping jaw assembly 22 and/or the second gripping jaw assembly 23 to slide with the first frame 21, which can be implemented in various ways such as using a projection-groove matching structure or a guide rail slider structure.

In this embodiment of this disclosure, the first gripping jaw assembly 22 and/or the second gripping jaw assembly 23 are slidably connected to the first frame 21 through the first slide rail assembly 26 in three ways: the first gripping jaw assembly 22 is slidably connected to the first frame 21 through the first slide rail assembly 26; the second gripping jaw assembly 23 is slidably connected to the first frame 21 through the first slide rail assembly 26; both the first gripping jaw assembly 22 and the second gripping jaw assembly 23 are slidably connected to the first frame 21 through the first slide rail assembly 26. Among them, that the first gripping jaw assembly 22 is slidably connected to the first frame 21 through the first slide rail assembly 26 may be implemented by driving only the first gripping jaw assembly 22 to move. That the second gripping jaw assembly 23 is slidably connected to the first frame 21 through the first slide rail assembly 26 may be implemented by driving only the second gripping jaw assembly 23 to move. That both the first gripping jaw assembly 22 and the second gripping jaw assembly 23 are slidably connected to the first frame 21 through the first slide rail assembly 26 may be implemented by driving both the first gripping jaw assembly 22 and the second gripping jaw assembly 23 to move.

In the foregoing battery grabbing device, the first gripping jaw assembly 22 and/or the second gripping jaw assembly 23 are slidably connected to the first frame 21 through the first slide rail assembly 26. Therefore, the first gripping jaw assembly 22 and/or the second gripping jaw assembly 23 can be moved easily, reducing the friction between them and the first frame 21. In addition, the movement can be guided and limited.

In a possible implementation provided in this embodiment of this disclosure, referring to FIG. 1 to FIG. 6, the first slide rail assembly 26 includes a first slide rail fixed on the first frame 21 and a first slider fixed on the first gripping jaw assembly 22 and/or the second gripping jaw assembly 23, where the first slide rail extends linearly along a direction in which the first gripping jaw assembly 22 and the second gripping jaw assembly 23 move towards or away from each other relative to the first frame 21, and the first slider is slidably connected to the first slide rail.

In this embodiment of this disclosure, the first slide rail assembly 26 is a slide rail structure. In some other embodiments, the slider may be fixed on the first frame 21, and the slide rail may be fixed on the first gripping jaw assembly 22 and/or the second gripping jaw assembly 23.

In the foregoing battery grabbing device, the first slide rail assembly 26 includes the first slide rail fixed on the first frame 21 and the first slider fixed on the first gripping jaw assembly 22 and/or the second gripping jaw assembly 23. Therefore, the first slider slides on the first slide rail, reducing the friction between the first slider and the first frame 21. In addition, the first slide rail can also play a role in position limiting.

In a possible implementation provided in this embodiment of this disclosure, referring to FIG. 1 to FIG. 6, the first distance adjusting mechanism 25 further includes a distance measuring device, and the distance measuring device is configured to measure displacement generated when the first gripping jaw assembly 22 and the second gripping jaw assembly 23 move towards or away from each other relative to the first frame 21.

In this embodiment of this disclosure, the distance measuring device refers to a component or element that can measure distance, for example, a distance meter or a magnetic grating ruler.

In the battery grabbing device, the distance measuring device is disposed to measure the displacement generated when the first gripping jaw assembly 22 and second gripping jaw assembly 23 move towards or away from each other relative to the first frame 21, so that more accurate adjustment can be implemented.

For example, the distance measuring device measures that the first gripping jaw assembly 22 and the second gripping jaw assembly 23 need to move closer by first displacement relative to the first frame 21. It should be further noted herein that the first displacement needs to match the width or length of the qualified battery 5, and the first displacement should be greater than or equal to the width or length of the qualified battery 5. For example, when the first distance adjusting mechanism 25 includes the first slide rail assembly 26, the first gripping jaw assembly 22 can move towards the second gripping jaw assembly 23 through the first slide rail assembly 26, the second gripping jaw assembly 23 can move towards the first gripping jaw assembly 22 through the first slide rail assembly 26, or the first gripping jaw assembly 22 can move towards the second gripping jaw assembly 23 through the first slide rail assembly 26 and the second gripping jaw assembly 23 can move towards the first gripping jaw assembly 22 through the first slide rail assembly 26, until the first gripping jaw assembly 22 and the second gripping jaw assembly 23 move closer by the first displacement relative to the first frame 21. At this time, when the distance measuring device measures that the first displacement is reached between the first gripping jaw assembly 22 and the second gripping jaw assembly 23, the gripper driver 24 drives the first gripper and/or the second gripper to move towards each other, so that the first gripper and the second gripper cooperate to grip the qualified battery 5.

In a possible implementation provided by this embodiment of this disclosure, referring to FIG. 1 to FIG. 6, the first gripper and/or the second gripper include a fixed frame, an abutting piece, and an elastic member, where the elastic member is located between the abutting piece and the fixed frame to provide a buffer force for pushing away the abutting piece and the fixed frame.

In this embodiment of this disclosure, that the first gripper and/or the second gripper include a fixed frame, an abutting piece, and an elastic member may be that: only the first gripper includes the fixed frame, the abutting piece, and the elastic member, only the second gripper includes the fixed frame, the abutting piece, and the elastic member, or both the first gripper and the second gripper include the fixed frame, the abutting piece, and the elastic member.

In this embodiment of this disclosure, the elastic member can deform to some extent under pressure and can recover when the pressure is released. Such deformation can absorb part of hard contact force, softening the contact between components. That is, the first gripper and/or the second gripper can grip the qualified battery 5 flexibly. The buffer force of the elastic member is a recovering force making it return to the original shape after deformation. The elastic member may be a resilient part, such as rubber and a spring.

In the foregoing battery grabbing device, because the elastic member is disposed, when the first gripper and the second gripper grip a qualified battery 5, the abutting piece is subject to a counteracting force from a contact surface of the qualified battery 5 and transmits the counteracting force to the elastic member, and the elastic member deforms under the force. In this case, the abutting piece is displaced towards the elastic member to some extent and absorbs that part of the counteracting force. In addition, the deformed elastic member generates a buffer force to push the abutting piece to the qualified battery 5, allowing the qualified battery 5 to be gripped by the abutting piece. This achieves flexible grabbing, preventing damage to the surface of the qualified battery 5 or deformation of the qualified battery 5 due to gripping.

In a possible implementation provided in this embodiment of this disclosure, referring to FIG. 1 to FIG. 6, the first gripper and/or the second gripper include a plurality of abutting pieces and a plurality of elastic members which are arranged in pairs, and the plurality of abutting pieces are arranged side by side.

In this embodiment of this disclosure, being arranged in pairs means that the abutting pieces are arranged in correspondence with the elastic members. To be specific, each abutting piece can be provided with one elastic member to ensure soft contact between the abutting pieces and the qualified battery 5.

In this embodiment of this disclosure, the plurality of abutting pieces are arranged side by side, meaning that the abutting pieces extend in the same direction and are arranged into a row along another direction. For example, the abutting surfaces of the plurality of abutting pieces all face the location of the qualified batteries 5 to be grabbed, and the abutting pieces are arranged side by side along the direction in which the qualified batteries 5 are arranged, so that a full row of qualified batteries 5 can be grabbed at a time. The elastic members and the abutting pieces are arranged in pairs. If the plurality of abutting pieces are arranged side by side, each abutting piece can be connected to another elastic member. In this way, a plurality of elastic members can also be arranged side by side.

In the foregoing battery grabbing device, the disposition of the plurality of abutting pieces allows the qualified batteries 5 of different sizes and quantities to be grabbed flexibly.

In a possible implementation provided in this embodiment of this disclosure, referring to FIG. 1 to FIG. 6, the tray grabbing apparatus 3 includes a second frame 31, a third gripping jaw assembly 32, a fourth gripping jaw assembly 33, a first drive mechanism 34, a second drive mechanism 35, and a second distance adjusting mechanism. The third gripping jaw assembly 32 is disposed on the second frame 31 and provided with a third gripper, the fourth gripping jaw assembly 33 is disposed on the second frame 31 and provided with a fourth gripper, and the third gripper and the fourth gripper are arranged opposite each other and spaced apart. The first drive mechanism 34 is arranged between the second frame 31 and the third gripping jaw assembly 32 and between the second frame 31 and the fourth gripping jaw assembly 33, and is configured to drive the third gripper and the fourth gripper to simultaneously move between the first workbench and the second workbench. The second drive mechanism 35 is arranged between the first drive mechanism 34 and the third gripping jaw assembly 32 and between the first drive mechanism 34 and the fourth gripping jaw assembly 33, and is configured to drive the third gripper and the fourth gripper to simultaneously move towards or away from the tray 4. The second distance adjusting mechanism is arranged between the second drive mechanism 35 and the third gripping jaw assembly 32 and/or between the second drive mechanism 35 and the fourth gripping jaw assembly 33, and is configured to drive the third gripper and the fourth gripper to move towards or away from each other relative to the second drive mechanism 35 and adjust a distance between the third gripper and the fourth gripper, so that the third gripper and the fourth gripper cooperate to grab the tray 4.

In this embodiment of this disclosure, the third gripper and the fourth gripper are arranged opposite each other and spaced apart, both the third gripper and the fourth gripper may be in a robot-arm structure, and the third gripper and the fourth gripper cooperate with each other to grab the tray 4. Alternatively, the third gripper and the fourth gripper may both be a plate structure, and the third gripper and the fourth gripper cooperate with each other to grab the tray 4. This is not limited in this embodiment of this disclosure. In addition, the third gripper and the fourth gripper may also be different structures.

In this embodiment of this disclosure, the first drive mechanism 34 is arranged between the second frame 31 and the third gripping jaw assembly 32 and between the second frame 31 and the fourth gripping jaw assembly 33, and is configured to drive the third gripper and the fourth gripper to simultaneously move between the first workbench and the second workbench. That is, the first drive mechanism 34 drives the third gripper and the fourth gripper to move simultaneously, with the same displacement. In addition, the first drive mechanism 34 drives the third gripper and the fourth gripper to move between the first workbench and the second workbench. To be specific, the first drive mechanism 34 drives the third gripper and the fourth gripper to move from the first workbench to the second workbench and from the second workbench to the first workbench.

In this embodiment of this disclosure, the second drive mechanism 35 is arranged between the first drive mechanism 34 and the third gripping jaw assembly 32 and between the first drive mechanism 34 and the fourth gripping jaw assembly 33, and is configured to drive the third gripper and the fourth gripper to simultaneously move towards or away from the tray 4. That is, the second drive mechanism 35 drives the third gripper and the fourth gripper to move simultaneously, with the same displacement. In addition, the second drive mechanism 35 drives the third gripper and the fourth gripper to simultaneously move towards or away from the tray 4. That is, the second drive mechanism 35 drives the third gripper and the fourth gripper to simultaneously move towards the tray 4 for grabbing the tray 4 later, and the second drive mechanism 35 drives the third gripper and the fourth gripper to simultaneously move away from the tray 4.

In this embodiment of this disclosure, the second distance adjusting mechanism is arranged between the second drive mechanism 35 and the third gripping jaw assembly 32 and/or between the second drive mechanism 35 and the fourth gripping jaw assembly 33, and is configured to drive the third gripper and the fourth gripper to or move towards or away from each other relative to the second drive mechanism 35, so as to adjust the distance between the third gripper and the fourth gripper. That is, if only arranged between the second drive mechanism 35 and the third gripping jaw assembly 32, the second distance adjusting mechanism drives only the third gripper to move towards or away from the fourth gripper relative to the second drive mechanism 35; if only arranged between the second drive mechanism 35 and the fourth gripping jaw assembly 33, the second distance adjusting mechanism drives only the fourth gripper to move towards or away from the fourth gripper relative to the second drive mechanism 35; and if the second distance adjusting mechanism is arranged both between the second drive mechanism 35 and the third gripping jaw assembly 32 and between the second drive mechanism 35 and the fourth gripping jaw assembly 33, the second distance adjusting mechanism drives both the third gripper and the fourth gripper to move towards or away from each other relative to the second drive mechanism 35, so as to adjust the distance between the third gripper and the fourth gripper.

In this embodiment of this disclosure, the second distance adjusting mechanism is configured to drive the third gripper and the fourth gripper to move towards or away from each other relative to the second drive mechanism 35, so as to adjust the distance between the third gripper and the fourth gripper. The distance after the adjustment needs to match the outer contour of the tray 4, and the distance after the adjustment may be greater than or equal to the width or length of the tray 4.

In the foregoing battery grabbing device, the second distance adjusting mechanism is disposed to drive the third gripper and the fourth gripper to move towards or away from each other relative to the second drive mechanism 35, so as to adjust the distance between the third gripper and the fourth gripper. In this way, the second distance adjusting mechanism can grab trays 4 of different sizes only by adjusting the distance between the third gripper and the fourth gripper, thereby improving the commonality of the tray grabbing apparatus 3. After the third gripper and the fourth gripper have grabbed the tray 4 through cooperation, a second driver assembly drives the third gripper and the fourth gripper to simultaneously move away from the tray 4, and a first driver drives the third gripper and the fourth gripper to move from the first workbench to the second workbench. At this time, the second distance adjusting mechanism drives the third gripper and the fourth gripper to move away from each other relative to the second drive mechanism 35 to release the tray 4 on the second workbench. After that, the third gripper and the fourth gripper may be left in the area of the second workbench or moved back to the first workbench under the driving force of the first drive mechanism 34 for grabbing the next tray 4.

In a possible implementation provided in this embodiment of this disclosure, referring to FIG. 1 to FIG. 6, the first drive mechanism 34 includes a first driver and a second slide rail assembly, where both the third gripping jaw assembly 32 and the fourth gripping jaw assembly 33 are connected to the second slide rail assembly, the first driver is connected to the second slide rail assembly, and the first driver is configured to drive the second slide rail assembly, consequently driving the third gripper and the fourth gripper to simultaneously move between the first workbench and the second workbench.

In this embodiment of this disclosure, the first driver may be a linear motor, the second slide rail assembly is directly connected to the linear motor, and the linear motor directly drives the third gripper and the fourth gripper to simultaneously move between the first workbench and the second workbench. The first driver may be a motor with torque output, and the motor with torque output cannot directly drive the second slide rail assembly. Therefore, a transmission mechanism, for example, a rack-and-pinion mechanism, a screw-nut mechanism, or a belt transmission mechanism, can be arranged between the first driver and the second slide rail assembly. The first driver is configured to drive the transmission mechanism, and the transmission mechanism is configured to drive the second slide rail assembly, consequently driving the third gripper and the fourth gripper to move between the first workbench and the second workbench.

In the foregoing battery grabbing device, the second slide rail assembly is disposed, and the first driver is connected to the second slide rail assembly, allowing the third gripper and the fourth gripper to easily move between the first workbench and the second workbench. This reduces the friction during the movement, and has the movement guided and limited.

In a possible implementation provided in this embodiment of this disclosure, referring to FIG. 1 to FIG. 6, the second slide rail assembly includes a second slide rail disposed on the second frame 31 and a second slider disposed on the third gripping jaw assembly 32 and the fourth gripping jaw assembly 33, where the second slide rail extends along a direction in which the first workbench and the second workbench are arranged, and the first driver is configured to drive the second slider to slide on the second slide rail.

In this embodiment of this disclosure, one second slider may be disposed on both the third gripping jaw assembly 32 and the fourth gripping jaw assembly 33. That is, the second slider is connected to both the third gripping jaw assembly 32 and the fourth gripping jaw assembly 33. Alternatively, different second sliders may be disposed on the third gripping jaw assembly 32 and the fourth gripping jaw assembly 33. That is, the third gripping jaw assembly 32 and the fourth gripping jaw assembly 33 each correspond to one second slider. However, when the first driver is configured to drive the second sliders, the second sliders corresponding to the third gripping jaw assembly 32 and the fourth gripping jaw assembly 33 respectively need to move simultaneously on the second slide rail.

Certainly, in this embodiment of this disclosure, the second slide rail assembly may also include a second slider disposed on the second frame 31 and a second slide rail disposed on the third gripping jaw assembly 32 and the fourth gripping jaw assembly 33, where the second slide rail extends along a direction in which the first workbench and the second workbench are arranged, and the first driver is configured to drive the second slider to slide on the second slide rail.

In the foregoing battery grabbing device, the second slide rail assembly includes the second slide rail fixed on the second frame 31 and the second slider fixed on the third gripping jaw assembly 32 and/or the fourth gripping jaw assembly 33. The first driver is configured to drive the second slider to slide on the second slide rail, reducing the friction between the second slider and the second frame 31. In addition, the second slide rail can also play a role in position limiting.

In a possible implementation provided in this embodiment of this disclosure, referring to FIG. 1 to FIG. 6, the second drive mechanism 35 includes a second driver and a third slide rail assembly, where both the third gripping jaw assembly 32 and the fourth gripping jaw assembly 33 are connected to the third slide rail assembly, the second driver is connected to the third slide rail assembly, and the second driver is configured to drive the third slide rail assembly, consequently driving the third gripper and the fourth gripper to simultaneously move towards or away from the tray 4.

In this embodiment of this disclosure, the second driver may be a linear motor, the second slide rail assembly is directly connected to the linear motor, and the linear motor directly drives the third gripper and the fourth gripper to simultaneously move towards or away from the tray 4. The second driver may be a motor with torque output, and the motor with torque output cannot directly drive the third slide rail assembly. Therefore, a transmission mechanism, for example, a rack-and-pinion mechanism, a screw-nut mechanism, or a belt transmission mechanism, can be arranged between the second driver and the third slide rail assembly. The second driver is configured to drive the transmission mechanism, and the transmission mechanism is configured to drive the third slide rail assembly, consequently driving the third gripper and the fourth gripper to simultaneously move towards or away from the tray 4.

In the foregoing battery grabbing device, the third slide rail assembly is disposed, and the second driver is connected to the third slide rail assembly, allowing the third gripper and the fourth gripper to easily move towards or away from the tray 4 simultaneously. This reduces the friction during the movement, and has the movement guided and limited.

In a possible implementation provided in this embodiment of this disclosure, referring to FIG. 1 to FIG. 6, the third slide rail assembly includes a third slide rail provided with the first drive mechanism 34 and a third slider disposed on the third gripping jaw assembly 32 and the fourth gripping jaw assembly 33, where the third slide rail extends along a direction forming an included angle with the direction in which the first workbench and the second workbench are arranged, and the second driver is configured to drive the third slider to slide on the third slide rail.

In this embodiment of this disclosure, one third slider may be disposed on both the third gripping jaw assembly 32 and the fourth gripping jaw assembly 33. That is, the third slider is connected to both the third gripping jaw assembly 32 and the fourth gripping jaw assembly 33. Alternatively, different third sliders may be disposed on the third gripping jaw assembly 32 and the fourth gripping jaw assembly 33. That is, the third gripping jaw assembly 32 and the fourth gripping jaw assembly 33 each correspond to one third slider. However, when the second driver drives the third sliders, the third sliders corresponding to the third gripping jaw assembly 32 and the fourth gripping jaw assembly 33 respectively need to move simultaneously on the third slide rail.

Certainly, in this embodiment of this disclosure, the third slide rail assembly may also include a third slider disposed on the first drive mechanism 34 and a third slide rail disposed on the third gripping jaw assembly 32 and the fourth gripping jaw assembly 33, where the third slide rail extends along a direction forming angle with the direction in which the first workbench and the second workbench are arranged, and the second driver is configured to drive the third slider to slide on the third slide rail.

In the foregoing battery grabbing device, the third slide rail assembly includes the third slide rail fixed on the first drive mechanism 34 and the third slider fixed on the third gripping jaw assembly 32 and/or the fourth gripping jaw assembly 33. The second driver is configured to drive the third slider to slide on the third slide rail, reducing the friction between the third slider and the first drive mechanism 34. In addition, the third slide rail can also play a role in position limiting.

In a possible implementation provided in this embodiment of this disclosure, referring to FIG. 1 to FIG. 6, the second distance adjusting mechanism includes a third driver and a fourth slide rail assembly, where the third gripping jaw assembly 32 and the fourth gripping jaw assembly 33 are connected to the fourth slide rail assembly, the third driver is connected to the fourth slide rail assembly, and the third driver is configured to drive the fourth slide rail assembly, consequently driving the third gripper and the fourth gripper to move towards or away from each other relative to the second drive mechanism 35.

In this embodiment of this disclosure, the third driver may be a linear motor, the fourth slide rail assembly is directly connected to the linear motor, and the linear motor directly drives the third gripper and the fourth gripper to simultaneously move towards or away from each other relative to the second drive mechanism 35. The third driver may be a motor with torque output, and the motor with torque output cannot directly drive the fourth slide rail assembly. Therefore, a transmission mechanism, for example, a rack-and-pinion mechanism, a screw-nut mechanism, or a belt transmission mechanism, can be arranged between the third driver and the fourth slide rail assembly. The third driver drives the transmission mechanism, the transmission mechanism drives the fourth slide rail assembly, and the fourth slide rail assembly consequently drives the third gripper and the fourth gripper to simultaneously move towards or away from each other relative to the second drive mechanism 35.

In the foregoing battery grabbing device, the fourth slide rail assembly is disposed, and the third driver is connected to the fourth slide rail assembly, allowing the third gripper and the fourth gripper to easily move towards or away from each other relative to the second drive mechanism 35. This reduces the friction during the movement, and has the movement guided and limited.

In a possible implementation provided in this embodiment of this disclosure, referring to FIG. 1 to FIG. 6, the fourth slide rail assembly includes a fourth slide rail disposed on the second drive mechanism 35 and a fourth slider disposed on the third gripping jaw assembly 32 and the fourth gripping jaw assembly 33, where the fourth slide rail extends along a direction in which the third gripper and the fourth gripper are arranged opposite each other, and the third driver is configured to drive the fourth slider to slide on the fourth slide rail.

In this embodiment of this disclosure, one fourth slider may be disposed on both the third gripping jaw assembly 32 and the fourth gripping jaw assembly 33. That is, the fourth slider is connected to both the third gripping jaw assembly 32 and the fourth gripping jaw assembly 33. Alternatively, different fourth sliders may be disposed on the third gripping jaw assembly 32 and the fourth gripping jaw assembly 33. That is, the third gripping jaw assembly 32 and the fourth gripping jaw assembly 33 each correspond to one fourth slider. However, when the third driver drives the fourth sliders, the fourth sliders slide on the fourth slide rail, so that the third gripper and the fourth gripper move towards or away from each other relative to the second drive mechanism 35.

Certainly, in this embodiment of this disclosure, the fourth slide rail assembly may alternatively includes a fourth slider disposed on the second drive mechanism 35 and a fourth slide rail disposed on the third gripping jaw assembly 32 and the fourth gripping jaw assembly 33, where the fourth slide rail extends along a direction in which the third gripper and the fourth gripper are arranged opposite each other, and the third driver is configured to drive the fourth slider to slide on the fourth slide rail.

In the foregoing battery grabbing device, the fourth slide rail assembly includes the fourth slide rail fixed on the second drive assembly and the fourth slider fixed on the third gripping jaw assembly 32 and/or the fourth gripping jaw assembly 33. The third driver is configured to drive the fourth slider to slide on the fourth slide rail, reducing the friction between the fourth slider and the second drive mechanism 35. In addition, the fourth slide rail can also play a role in position limiting.

A second aspect of the embodiments of this disclosure provides a battery production line. The battery production line includes the battery grabbing device according to any one of the embodiments of the first aspect and a production device, where the production device is configured to produce batteries to be grabbed by the battery grabbing apparatus in the battery grabbing device provided in any one of the embodiments of the first aspect.

In an embodiment of this disclosure, the battery produced by the production device may be a battery cell, a battery module, or a battery pack. The production device may be a production device for producing battery cells, an assembly device for assembling battery cells into battery modules, or an assembly device for assembling battery cells into battery packs. It should be further noted herein that a type of the production device is not limited in the embodiments of this disclosure.

The foregoing battery production line includes the battery grabbing device provided in any one of the embodiments of the first aspect. Therefore, same technical effects can be achieved. That is, the level of automation of the battery production line is increased accordingly after the battery grabbing device is adopted.

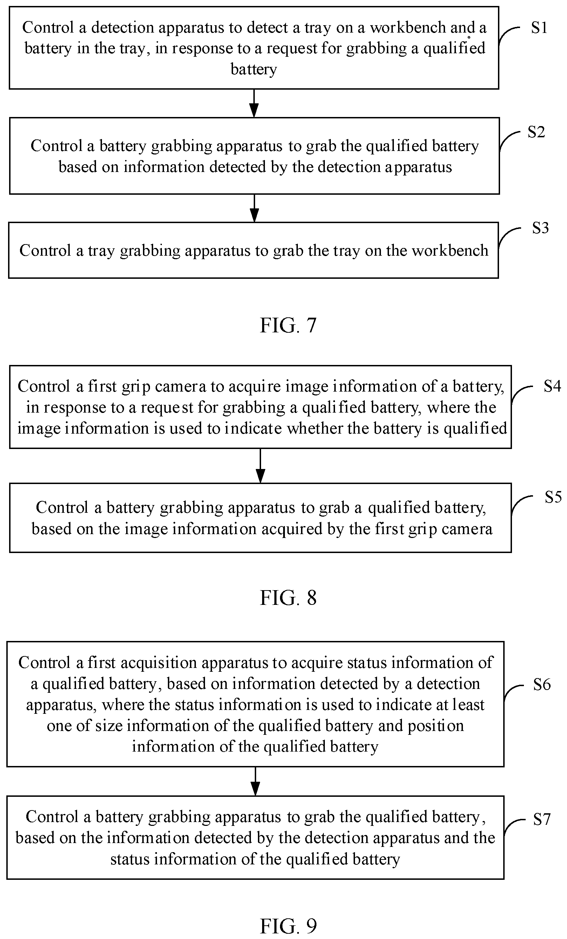

A third aspect of the embodiments of this disclosure provides a control method for a battery grabbing device. The control method is applied to a controller. The battery grabbing device includes a support, a workbench, a battery grabbing apparatus, and a detection apparatus disposed on the support. Referring to FIG. 7, the control method includes steps S1 to S3.

Step S1. Control the detection apparatus to detect a tray on the workbench and a battery in the tray, in response to a request for grabbing a qualified battery.

In this embodiment of this disclosure, responding to a request for grabbing a qualified battery may be that: an operator presses a pressing instruction on a module of the battery production line, and the controller receives the pressing instruction and controls the detection apparatus to detect the battery carried by the workbench; and responding to a request for grabbing a qualified battery may also be that: an operator makes a voice, and the controller receives the voice from the operator and controls the detection apparatus to detect the battery carried by the workbench. It should be further noted herein that this disclosure does not limit the way of responding to a request for grabbing a qualified battery.

Step S2. Control the battery grabbing apparatus to grab the qualified battery based on information detected by the detection apparatus.

In this embodiment of this disclosure, the battery grabbing apparatus is controlled to grab the qualified battery based on the information detected by the detection apparatus. If the detection apparatus detects no information about the battery, the controller receives an instruction that the battery does not exist and then does not control the battery grabbing apparatus or controls the battery grabbing apparatus not to grab. If the detection apparatus detects the information about the battery, the controller receives an instruction that the battery exists, and the controller controls the battery grabbing apparatus to grab the qualified battery.

Step S3. Control the tray grabbing apparatus to grab the tray on the workbench.

In the foregoing control method for the battery grabbing device, the detection apparatus is disposed on the support, and the detection apparatus can detect whether a battery on the workbench is qualified when the battery is placed on the workbench. If the battery is qualified, the battery grabbing apparatus is controlled to grab the qualified battery, and if the battery is unqualified, the battery grabbing apparatus is controlled to not grab the unqualified battery, thereby ensuring that all batteries grabbed by the battery grabbing apparatus are qualified batteries. This increases the probability of the entire battery grabbing device in grabbing qualified batteries. On this basis, the battery is located in the tray, and after the battery grabbing apparatus grabs the qualified battery, the tray grabbing apparatus can grab the tray. Then, the workbench can carry a new tray, and the new tray is provided with a new battery for the next round of grabbing. This increases the level of automation of the battery grabbing device. Similarly, by using the control method for the battery grabbing device, qualified batteries can be grabbed quickly and accurately, improving the grabbing efficiency of batteries.

In a possible implementation provided in this embodiment of this disclosure, the detection apparatus includes a first grip camera, and the first grip camera acquires image information of the battery, where the image information is used to indicate whether the battery is qualified. Referring to FIG. 8, the control method further includes steps S4 and S5.

Step S4. Control the first grip camera to acquire image information of the battery, in response to the request for grabbing the qualified battery, where the image information is used to indicate whether the battery is qualified.

In this embodiment of this disclosure, the first grip camera is controlled to acquire the image information of the battery. The image information may be image information in a quick response code on the battery, tag information on the battery, or the like. It should be further noted herein that the image information of the battery is not limited in this embodiment of this disclosure.

Step S5. Control the battery grabbing apparatus to grab the qualified battery, based on the image information acquired by the first grip camera.

In this embodiment of this disclosure, the battery grabbing apparatus is controlled to grab the qualified battery based on the image information acquired by the first grip camera. The controller may directly obtain the image information, and the controller may also process and analyze the acquired image information to obtain a result indicating whether the battery is a qualified battery.

In the foregoing control method for the battery grabbing device, because cameras have the advantages of ready availability and low cost, the image information of the battery can be acquired by the first grip camera. Then, the image information of the battery acquired by the first grip camera can be used for controlling the battery grabbing apparatus to grab the qualified battery more quickly.

In a possible implementation provided in this embodiment of this disclosure, the battery grabbing device further includes a first acquisition apparatus disposed on the support, and the first acquisition apparatus acquires status information of the qualified battery to control the battery grabbing apparatus to grab the battery. Referring to FIG. 9, the control method further includes steps S6 and S7.

Step S6. Control the first acquisition apparatus to acquire status information of the qualified battery, based on the information detected by the detection apparatus, where the status information is used to indicate at least one of size information of the qualified battery and position information of the qualified battery.

In this embodiment of this disclosure, the first acquisition apparatus acquires the status information of the qualified battery. The status information of the qualified battery may be the size information of the qualified battery, for example, the length, width, and height of the qualified battery, or may be the position information of the qualified battery, for example, whether the qualified battery is displaced. It should be explained herein that this embodiment of this disclosure does not limit the specific content and acquisition way of the status information of the qualified battery acquired by the first acquisition apparatus.

Step S7. Control the battery grabbing apparatus to grab the qualified battery, based on the information detected by the detection apparatus and the status information of the qualified battery.

In the foregoing control method for the battery grabbing device, the first acquisition apparatus is disposed to acquire the status information of the qualified battery, and the detected information for checking whether a battery is qualified is provided. In this case, the battery grabbing apparatus can be controlled to accurately grab the qualified battery based on the information detected by the detection apparatus and the status information of the qualified battery.

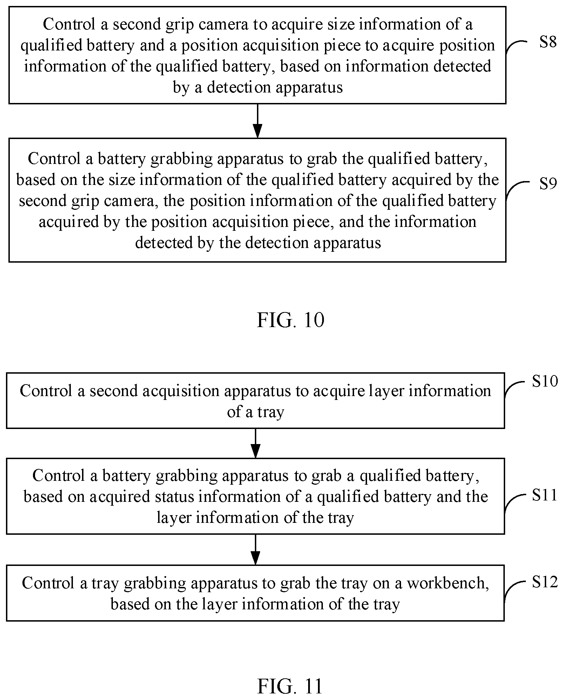

In a possible implementation provided in this embodiment of this disclosure, the first acquisition apparatus includes a second grip camera and a position acquisition piece. The battery grabbing apparatus is controlled to grab the qualified battery, based on the size information of the qualified battery acquired by the second grip camera and the position information of the qualified battery acquired by the position acquisition piece. Referring to FIG. 10, the control method further includes steps S8 and S9.

Step S8. Control the second grip camera to acquire the size information of the qualified battery and the position acquisition piece to acquire the position information of the qualified battery, based on the information detected by the detection apparatus.

Step S9. Control the battery grabbing apparatus to grab the qualified battery, based on the size information of the qualified battery acquired by the second grip camera, the position information of the qualified battery acquired by the position acquisition piece, and the information detected by the detection apparatus.

In the foregoing control method for the battery grabbing device, the second grip camera is disposed for acquiring the size information of the qualified battery and the position acquisition piece is disposed for acquiring the position information of the qualified battery. Therefore, the status information of the qualified battery can be accurately acquired, so that the battery grabbing apparatus is controlled to grab the qualified battery more accurately.

In a possible implementation provided in this embodiment of this disclosure, the battery grabbing device further includes a second acquisition apparatus disposed on the support, and the second acquisition apparatus acquires layer information of the tray to control the battery grabbing apparatus to grab the qualified battery and control the tray grabbing apparatus to grab the tray on the workbench. Referring to FIG. 11, the control method further includes steps S10 to S12.

Step S10. Control the second acquisition apparatus to acquire layer information of the tray.

Step S11. Control the battery grabbing apparatus to grab the qualified battery, based on the acquired status information of the qualified battery and the layer information of the tray.

Step S12. Control the tray grabbing apparatus to grab the tray on the workbench, based on the layer information of the tray.

In the foregoing control method for the battery grabbing device, the second acquisition apparatus is disposed. The second acquisition apparatus is configured to acquire the layer information of the tray, and the first acquisition apparatus acquires the status information of the qualified battery. In this case, the second acquisition apparatus and the first acquisition apparatus can face each other, so that the size information of the battery can be obtained more accurately. This enables the battery grabbing apparatus to grab qualified batteries accurately and the tray grabbing apparatus to grab trays accurately.

If the control method for the battery grabbing device is executed by a robot, the battery grabbing device is initialized in the specific circulation process. At this time, the entire battery grabbing device is in a cycle stop state. The start button is pressed, and the feeding mode is determined and the feeding times are calculated. In addition, whether there is any material is determined. The state of a work order is displayed. If there is any material, the work order proceeds with an initialization. If there is no material, it reaches a marked position for data assignment. Then, the robot gripper is adjusted accordingly and material picking is allowed. In addition, the controller is triggered to determine whether a tray is heading for the direction of inspection. Under proper visual conditions, photographing is triggered. After photographing is triggered, data inspection is performed and the inspection result is checked. At the same time, the direction inspection is completed, and visual work requirements are written. If the result is positive, the positive value of the direction position is obtained; if the result is negative, the positive value of the direction is obtained. At this time, the tray direction is determined. In addition, the tray direction is dynamically completed, the robot requests to detect the offset and direction of the battery for obtaining the battery direction and offset. They are written in the visual work requirements for triggering, such as photographing, and data comparison is performed. At this time, the process ends, and the obtained offset is transmitted internally for determining the offset and battery direction. If the offset is normal and the battery direction is positive, the battery direction is positive; if the offset is normal and the battery direction is positive, the battery direction is positive, and the offset and battery angle are completed. At this time, whether to scan the code is determined. If the first column at the highest level is scanned, it will be written into the vision under proper visual conditions, and the data is compared and verified. If it is normal, the code is read. When the reading is successful, this process ends. If it is abnormal, the process returns to the step of determining whether to scan the code. At this time, if it is the first column at a non-highest level, the height of this column is detected. The height is measured if the height allows. If this column is detected to be excessively high, an alarm is generated for recovering the allowed height, and the detection is normal. At this time, the robot requests that the cylinder is pressed down for a test. When the cylinder is pressed down in position, whether there is a battery at the fixed end is detected. If there is a battery, an alarm is generated for abnormal grabbing. If there is no battery, the pressed cylinder is reset. The robot arrives at the material picking station. The robot gripper shuts to detect whether there are batteries and whether the number of batteries is unexpected. If it is expected, over-height detection is performed at the material grabbing position to observe whether it is excessively high. If it is normal, the robot gripper shuts, waiting for the robot to rise. Whether the product exists and the number of batteries are checked. If they are normal, the cylinder clamping position is translated, and the position acquisition piece requests to ascend and descend until the material picking is completed. Wait for the robot to leave and instruct the end of material picking. At this time, the position acquisition piece translates and descends, the discharging path is smooth. The servo motor is cleaned. The vertical cylinder descends to be in position, and the discharging translation cylinder is started and the vertical cylinder rises, waiting for the robot to discharge and requesting the gripper to open. The gripper is opened to complete the discharging, and returns to its initial position.

The foregoing embodiments are merely intended for describing the technical solutions of this disclosure but not for limiting this disclosure. Although this disclosure is described in detail with reference to the foregoing embodiments, persons of ordinary skill in the art should understand that they may still make modifications to the technical solutions described in the foregoing embodiments or make equivalent replacements to some or all technical features thereof without departing from the scope of the technical solutions of the embodiments of this disclosure. They should all be covered in the scope of the specification of this disclosure. In particular, in absence of structural conflict, the various technical features mentioned in the embodiments can be combined in any manner. This disclosure is not limited to the specific embodiments disclosed herein.

A computer-readable storage medium may be a ferromagnetic random access memory (ferromagnetic random access memory, FRAM), a read only memory (Read Only Memory, ROM), a programmable read-only memory (Programmable Read-Only Memory, PROM), an erasable programmable read-only memory (Erasable Programmable Read-Only Memory, EPROM), an electrically erasable programmable read-only memory (Electrically Erasable Programmable Read-Only Memory, EEPROM), a flash memory (Flash Memory), a magnetic surface memory, a compact disc, a compact disc read-only memory (Compact Disc Read-Only Memory, CD-ROM), or the like.

Persons skilled in the art should understand that embodiments of this disclosure may be provided as a method, a system, or a computer program product. Therefore, this disclosure may use hardware embodiments, software embodiments, or embodiments combining hardware and software. Moreover, this disclosure may be in the form of a computer program product implemented on one or more computer usable storage media (including but not limited to a magnetic disk memory and an optical storage) containing computer usable program code.

This disclosure is described with reference to flowcharts and/or block diagrams of methods, devices (systems), and computer program products according to embodiments of this disclosure. It should be understood that computer program instructions may be used to implement each process and/or each block in the flowcharts and/or the block diagrams and a combination of processes and/or blocks in the flowcharts and/or the block diagrams. These computer program instructions may be provided to a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may alternatively be stored in a computer-readable memory that can direct a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may be loaded onto a computer or another programmable data processing device, so that a series of operation steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

The foregoing descriptions are merely preferred embodiments of this disclosure, and are not intended to limit the protection scope of this disclosure.

### Industrial practicability

In this disclosure, the detection apparatus is disposed on the support, and the detection apparatus can detect whether a battery on the workbench is qualified when the battery is placed on the workbench. If the battery is qualified, the battery grabbing apparatus grabs the qualified battery, and if the battery is unqualified, the battery grabbing apparatus does not grab the unqualified battery, thereby ensuring that all batteries grabbed by the battery grabbing apparatus are qualified batteries. This increases the probability of the entire battery grabbing device in grabbing qualified batteries. On this basis, the battery is located in the tray, and after the battery grabbing apparatus grabs the qualified battery, the tray grabbing apparatus can grab the tray. Then, the workbench can carry a new tray, and the new tray is provided with a new battery for the next round of grabbing. This increases the level of automation of the battery grabbing device. In the related art, after the battery grabbing apparatus grabs a battery or qualified battery, the tray is still left on the workbench and needs to be removed from the workbench manually. Therefore, the battery grabbing device has a low level of automation. However, in this disclosure, the tray grabbing apparatus is disposed. Therefore, after the battery grabbing apparatus grabs the qualified battery, the tray grabbing apparatus at least grabs the tray, without a need for manual grabbing. This increases the level of automation of the battery grabbing device.

## Claims

1. A battery grabbing device comprising:
a support;
a workbench, wherein the workbench is configured to carry a tray and a battery in the tray;
a detection apparatus, wherein the detection apparatus is disposed on the support and configured to detect whether the battery on the workbench is qualified;
a battery grabbing apparatus, wherein the battery grabbing apparatus is configured to grab a qualified battery; and
a tray grabbing apparatus, wherein the tray grabbing apparatus is at least configured to grab the tray after the battery grabbing apparatus grabs the qualified battery.

2. The battery grabbing device according to claim 1, wherein the detection apparatus comprises a first grip camera, and the first grip camera is configured to acquire image information of the battery, wherein the image information is used to indicate whether the battery is qualified.

3. The battery grabbing device according to claim 1 or 2, wherein the battery grabbing device further comprises a first acquisition apparatus, and the first acquisition apparatus is disposed on the support and configured to acquire status information of the qualified battery on the workbench, wherein the status information is used to indicate at least one of size information of the qualified battery and position information of the qualified battery.

4. The battery grabbing device according to claim 3, wherein the first acquisition apparatus comprises a second grip camera, and the second grip camera is configured to acquire the size information of the qualified battery.

5. The battery grabbing device according to claim 3 or 4, wherein the first acquisition apparatus comprises a position acquisition piece, and the position acquisition piece is configured to acquire the position information of the qualified battery.

6. The battery grabbing device according to any one of claims 1 to 5, wherein the battery grabbing device further comprises a second acquisition apparatus, the second acquisition apparatus is disposed on the support, and the second acquisition apparatus is configured to acquire layer information of the tray.

7. The battery grabbing device according to any one of claims 1 to 6, wherein the workbench comprises a first workbench and a second workbench, the first workbench is configured to carry the tray and the battery in the tray, and after the battery grabbing apparatus grabs the qualified battery on the first workbench, the tray grabbing apparatus grabs the tray on the first workbench and transports the tray to the second workbench.

8. The battery grabbing device according to claim 7, wherein the workbench further comprises a first transport platform and a second transport platform, the first transport platform is configured to transport the tray and the battery in the tray to the first workbench, and the second transport platform is configured to transport the tray on the second workbench to other positions.

9. The battery grabbing device according to any one of claims 1 to 8, wherein the battery grabbing apparatus comprises:
a first frame;
a first gripping jaw assembly, disposed on the first frame and provided with a first gripper;
a second gripping jaw assembly, disposed on the first frame and provided with a second gripper, wherein the first gripper and the second gripper are arranged opposite each other and spaced apart;
a gripper driver, configured to drive the first gripper and/or the second gripper to move so that the first gripper and the second gripper move towards each other, wherein the first gripper and the second gripper cooperate to grip the qualified battery; and
a first distance adjusting mechanism, arranged between the first frame and the first gripping jaw assembly and/or between the first frame and the second gripping jaw assembly, and configured to drive the first gripping jaw assembly and the second gripping jaw assembly to move towards or away from each other relative to the first frame, so as to adjust a distance between the first gripping jaw assembly and the second gripping jaw assembly.

10. The battery grabbing device according to claim 9, wherein the first distance adjusting mechanism comprises a rotation driver and a transmission mechanism, wherein an input end of the transmission mechanism is drivingly connected with the rotation driver, and an output end of the transmission mechanism is drivingly connected with the first gripping jaw assembly and/or the second gripping jaw assembly, wherein the transmission mechanism is configured to convert rotary torque of the rotation driver into linear motion and transmit the linear motion to the first gripping jaw assembly and/or the second gripping jaw assembly.

11. The battery grabbing device according to claim 10, wherein the transmission mechanism comprises a transmission rod having a screw thread and a screw thread disposed on the first gripping jaw assembly and/or the second gripping jaw assembly, wherein the transmission rod is permanently connected to the rotation driver, the screw thread of the transmission rod matches the screw thread on the first gripping jaw assembly and/or the second gripping jaw assembly, and the rotation driver is configured to drive the transmission rod to rotate so as to drive the first gripping jaw assembly and the second gripping jaw assembly to move towards or away from each other relative to the first frame.

12. The battery grabbing device according to claim 10 or 11, wherein the first distance adjusting mechanism further comprises a first slide rail assembly, and the first gripping jaw assembly and/or the second gripping jaw assembly are slidably connected to the first frame through the first slide rail assembly.

13. The battery grabbing device according to claim 12, wherein the first slide rail assembly comprises a first slide rail fixed on the first frame and a first slider fixed on the first gripping jaw assembly and/or the second gripping jaw assembly, wherein the first slide rail extends linearly along a direction in which the first gripping jaw assembly and the second gripping jaw assembly move towards or away from each other relative to the first frame, and the first slider is slidably connected to the first slide rail.

14. The battery grabbing device according to any one of claims 10 to 13, wherein the first distance adjusting mechanism further comprises a distance measuring device, and the distance measuring device is configured to measure displacement generated when the first gripping jaw assembly and the second gripping jaw assembly move towards or away from each other relative to the first frame.

15. The battery grabbing device according to any one of claims 9 to 14, wherein the first gripper and/or the second gripper comprise a fixed frame, an abutting piece, and an elastic member, wherein the elastic member is located between the abutting piece and the fixed frame to provide a buffer force for pushing away the abutting piece and the fixed frame.

16. The battery grabbing device according to claim 15, wherein the first gripper and/or the second gripper comprise a plurality of abutting pieces and a plurality of elastic members which are arranged in pairs, and the plurality of abutting pieces are arranged side by side.

17. The battery grabbing device according to claim 7 or 8, wherein the tray grabbing apparatus comprises:
a second frame;
a third gripping jaw assembly, disposed on the second frame and provided with a third gripper;
a fourth gripping jaw assembly, disposed on the second frame and provided with a fourth gripper, wherein the third gripper and the fourth gripper are arranged opposite each other and spaced apart;
a first drive mechanism, arranged between the second frame and the third gripping jaw assembly and between the second frame and the fourth gripping jaw assembly, and configured to drive the third gripper and the fourth gripper to simultaneously move between the first workbench and the second workbench;
a second drive mechanism, arranged between the first drive mechanism and the third gripping jaw assembly and between the first drive mechanism and the fourth gripping jaw assembly, and configured to drive the third gripper and the fourth gripper to move towards or away from the tray; and
a second distance adjusting mechanism, arranged between the second drive mechanism and the third gripping jaw assembly and/or between the second drive mechanism and the fourth gripping jaw assembly, and configured to drive the third gripper and the fourth gripper to move towards or away from each other relative to the second drive mechanism and adjust a distance between the third gripper and the fourth gripper, so that the third gripper and the fourth gripper cooperate to grab the tray.

18. The battery grabbing device according to claim 17, wherein the first drive mechanism comprises a first driver and a second slide rail assembly, wherein both the third gripping jaw assembly and the fourth gripping jaw assembly are connected to the second slide rail assembly, the first driver is connected to the second slide rail assembly, and the first driver is configured to drive the second slide rail assembly, consequently driving the third gripper and the fourth gripper to simultaneously move between the first workbench and the second workbench.

19. The battery grabbing device according to claim 18, wherein the second slide rail assembly comprises a second slide rail disposed on the second frame and a second slider disposed on the third gripping jaw assembly and the fourth gripping jaw assembly, wherein the second slide rail extends along a direction in which the first workbench and the second workbench are arranged, and the first driver is configured to drive the second slider to slide on the second slide rail.

20. The battery grabbing device according to any one of claims 17 to 19, wherein the second drive mechanism comprises a second driver and a third slide rail assembly, wherein both the third gripping jaw assembly and the fourth gripping jaw assembly are connected to the third slide rail assembly, the second driver is connected to the third slide rail assembly, and the second driver is configured to drive the third slide rail assembly, consequently driving the third gripper and the fourth gripper to move towards or away from the tray simultaneously.

21. The battery grabbing device according to claim 20, wherein the third slide rail assembly comprises a third slide rail provided with the first drive mechanism and a third slider disposed on the third gripping jaw assembly and the fourth gripping jaw assembly, wherein the third slide rail extends closer to or further from a direction forming an included angle with the direction in which the first workbench and the second workbench are arranged, and the second driver is configured to drive the third slider to slide on the third slide rail.

22. The battery grabbing device according to any one of claims 17 to 21, wherein the second distance adjusting mechanism comprises a third driver and a fourth slide rail assembly, wherein the third gripping jaw assembly and the fourth gripping jaw assembly are connected to the fourth slide rail assembly, the third driver is connected to the fourth slide rail assembly, and the third driver is configured to drive the fourth slide rail assembly, consequently driving the third gripper and the fourth gripper to move towards or away from each other relative to the second drive mechanism.

23. The battery grabbing device according to claim 22, wherein the fourth slide rail assembly comprises a fourth slide rail disposed on the second drive mechanism and a fourth slider disposed on the third gripping jaw assembly and the fourth gripping jaw assembly, wherein the fourth slide rail extends along a direction in which the third gripper and the fourth gripper are arranged opposite each other, and the third driver is configured to drive the fourth slider to slide on the fourth slide rail.

24. A battery production line, comprising:
at least one battery grabbing device according to any one of claims 1 to 23; and
a production device, configured to produce batteries to be grabbed by the battery grabbing apparatus in the battery grabbing device according to any one of claims 1 to 23.

25. A control method for a battery grabbing device, applied to a controller, wherein the battery grabbing device comprises a support, a workbench, a detection apparatus disposed on the support, a battery grabbing apparatus, and a tray grabbing apparatus, wherein the control method comprises:
controlling the detection apparatus to detect a tray on the workbench and a battery in the tray, in response to a request for grabbing a qualified battery;
controlling the battery grabbing apparatus to grab the qualified battery based on information detected by the detection apparatus; and
controlling the tray grabbing apparatus to grab the tray on the workbench.

26. The control method according to claim 25, wherein the detection apparatus comprises a first grip camera, and the control method further comprises:
controlling the first grip camera to acquire image information of the battery, in response to the request for grabbing the qualified battery, wherein the image information is used to indicate whether the battery is qualified;
controlling the battery grabbing apparatus to grab the qualified battery, based on the image information acquired by the first grip camera; and
controlling the tray grabbing apparatus to grab the tray on the workbench.

27. The control method according to claim 25 or 26, wherein the battery grabbing device further comprises a first acquisition apparatus disposed on the support, and the control method further comprises:
controlling the first acquisition apparatus to acquire status information of the qualified battery, based on the information detected by the detection apparatus, wherein the status information is used to indicate at least one of size information of the qualified battery and position information of the qualified battery;
controlling the battery grabbing apparatus to grab the qualified battery, based on the information detected by the detection apparatus and the status information of the qualified battery; and
controlling the tray grabbing apparatus to grab the tray on the workbench.

28. The control method according to claim 27, wherein the first acquisition apparatus comprises a second grip camera and a position acquisition piece, and the control method further comprises:
controlling the second grip camera to acquire the size information of the qualified battery and the position acquisition piece to acquire the position information of the qualified battery, based on the information detected by the detection apparatus;
controlling the grabbing apparatus to grab the qualified battery, based on the size information of the qualified battery acquired by the second grip camera, the position information of the qualified battery acquired by the position acquisition piece, and the information detected by the detection apparatus; and
controlling the tray grabbing apparatus to grab the tray on the workbench.

29. The control method according to claim 27 or 28, wherein the battery grabbing device further comprises a second acquisition apparatus disposed on the support, and the control method further comprises:
controlling the second acquisition apparatus to acquire layer information of the tray;
controlling the battery grabbing apparatus to grab the qualified battery, based on the acquired status information of the qualified battery and the layer information of the tray; and
controlling the tray grabbing apparatus to grab the tray on the workbench, based on the layer information of the tray.
